# EUROPEAN PATENT SPECIFICATION

(11) **EP 3 006 484 B1**
(45) Date of publication and mention of the grant of the patent: **21.03.2018**
(21) Application number: 14807449.5
(22) Date of filing: 04.06.2014
(51) Int. Cl.: C08G 65/18, B29C 67/00, C08G 59/68

(54) **RESIN COMPOSITION FOR OPTICAL THREE-DIMENSIONAL MODELING**
HARZZUSAMMENSETZUNG FÜR OPTISCHE DREIDIMENSIONALE MODELLIERUNG
COMPOSITION DE RÉSINE POUR MOULAGE TRIDIMENSIONNEL OPTIQUE

(30) Priority: 04.06.2013 JP 2013117642
(43) Date of publication of application: 13.04.2016
(73) Proprietor: Cmet Inc., Yokohama-shi, Kanagawa 222-0033 (JP)
(72) Inventor: NAKAMOTO, Eiji, Yokohama-shi Kanagawa 222-0033 (JP); OGANE, Nobuo, Yokohama-shi Kanagawa 222-0033 (JP); HONMA, Chiharu, Yokohama-shi Kanagawa 222-0033 (JP)
(74) Representative: Grünecker Patent- und Rechtsanwälte PartG mbB
(86) International application number: PCT/JP2014/064853
(87) International publication number: WO 2014/196571

(56) References cited:
- WO-A1-2009/145167
- WO-A2-2014/007399
- JP-A- 2002 327 127
- JP-A- 2003 277 712
- JP-A- 2005 015 739
- JP-A- 2009 234 199
- JP-A- 2010 174 104
- DATABASE WPI Week 201058 Thomson Scientific, London, GB; AN 2010-K54085 XP002765605, & JP 2010 174104 A (SHIMETTO KK) 12 August 2010 (2010-08-12)

## Description

### BACKGROUND OF THE INVENTION

### Technical Field

The present invention relates to a resin composition for optical three-dimensional modeling, with which an optically three-dimensionally modeled object having a high impact strength and toughness so as to resist breakage and offer excellent durability, exhibiting low yellowness, having high light transmittance, and being superior in color tone and transparency, and moreover being superior in terms of mechanical properties, can be produced at a fast light curing rate, smoothly, and with a high productivity while attaining a high modeling accuracy, and to a method for producing an optically three-dimensionally modeled object using the resin composition for optical three-dimensional modeling.

### Background Art

A method for optically and three-dimensionally modeling a liquid-form light curing resin composition based on data inputted to a three-dimensional CAD has come to be adopted broadly, because an intended three-dimensionally modeled object can be produced at a favorable dimensional accuracy without preparing a mold, etc.

One of typical examples of a method for optical three-dimensional modeling is a method, by which a layering process of irradiating selectively a liquid surface of a liquid-form light curing resin in a container with computer-regulated ultraviolet laser so as to cure a predetermined thickness of the resin and form a desired pattern; then supplying a liquid-form resin onto the cured layer in an amount equivalent to a layer, and irradiating the same with ultraviolet light laser identically as above for curing to yield a continuous series of cured layers, is repeated to obtain finally a three-dimensionally modeled object. By this optical three-dimensional modeling method, a modeled object with a considerably complicated shape can be obtained easily and within a relatively short time.

A resin or a resin composition to be used for optical three-dimensional modeling is required to have a high curing sensitivity with respect to an active energy ray enabling a three-dimensionally modeled object to be produced in a shortened modeling time, and to be superior in a handling property during modeling due to a low viscosity.

A three-dimensionally modeled object obtained by optical modeling using a resin composition for optical three-dimensional modeling has been used in broad applications, such as a model for verifying an appearance design on various industrial products in the middle of a design work, a model for testing the function of a part, a resin mold for producing a casting mold, and a base model for producing a mold. Further, in recent years, a model with a high transparency and without a yellowing tendency, such as a lens for an automobile or a motorbike has been demanded, and the application has been broadened to include a field of fine arts and crafts, such as restoration and copying of an art work, and a design presentation model for a contemporary art, or a glass-walled building, and therefore a resin composition for optical three-dimensional modeling yielding a three-dimensionally modeled object with a high light transmittance and a superior transparency and without yellowish coloring has been sought after.

Further, a three-dimensionally modeled object to be yielded by optically modeling a resin composition for optical three-dimensional modeling is required to have a superior toughness resisting to breakage. From this viewpoint, a resin composition for optical three-dimensional modeling, composed of a resin composition for optical three-dimensional modeling containing a cationically polymerizable organic compound having an epoxy group and a radically polymerizable organic compound having an unsaturated double bond, and a plasticity improving agent (tensile elongation improving agent), to be added thereto, composed of a polyether constituted with tetra(ethylene oxide) units and/or 2-substituted tetra(ethylene oxide) units, and having hydroxy groups at both the ends, has been proposed (Patent Literature 1). Although Patent Literature 1 describes that by optically modeling the resin composition for optical three-dimensional modeling containing a polyether, a three-dimensionally modeled object having not only improved tensile elongation but also a superior load deflection property (a three-dimensionally modeled object with little decrease in the load deflection temperature) can be obtained, as the results of an optical modeling experiment for corroboration conducted by the inventors using the resin composition for optical three-dimensional modeling according to Patent Literature 1, especially the resin composition for optical three-dimensional modeling according to Example 1, Example 10, *etc.* thereof, optical modeling was difficult, or even when optical modeling was possible, a formed three-dimensionally modeled object was so weak and fragile, and a practicably usable three-dimensionally modeled object superior in load deflection (heat resistance), tensile elongation, and toughness could not obtained.

Meanwhile, the inventors have found that in a case in which a poly(alkylene ether) compound is added to a resin composition for optical three-dimensional modeling containing a cationically polymerizable organic compound and a radically polymerizable organic compound, a resin composition for optical three-dimensional modeling to yield a three-dimensionally modeled object having a high impact strength and being superior in toughness can be obtained, and already applied for a patent (refer to Patent Literature 2).

Although a three-dimensionally modeled object obtained by optically modeling the resin composition for optical three-dimensional modeling containing a poly(alkylene ether) had a high impact strength and was superior in toughness, it had a yellowish color tone and was hazy allowing insufficient light transmittance. Therefore the object was able to be used effectively in applications not requiring a favorable color tone or transparency, but was not suitable for applications requiring an excellent color tone and superior transparency.

Under such circumstances, development of a resin composition for optical three-dimensional modeling suitable for yielding an optically three-dimensionally modeled object having a high impact strength and being superior in toughness and durability, and further not being colored yellowish, having a high light transmittance, and being superior in color tone and transparency has been sought after. JP 2010 174104 A discloses a composition for 3D printing comprising at least an oxetane compound, an polyalkylene glycol, a radical initiator and a cationic initiator.

### Citation List

### Patent Literature

Patent Literature 1: Japanese Unexamined Patent Application Publication No. 2003-73457
Patent Literature 2: Japanese Unexamined Patent Application Publication No. 2005-15739

### SUMMARY OF THE INVENTION

### Technical Problem

An object of the present invention is to provide a resin composition for optical three-dimensional modeling having superior characteristics that the curing sensitivity to an active energy ray is high so as to allow efficient production of a three-dimensionally modeled object in a shortened irradiation time with an active energy ray, the handling property during modeling is superior due to a low viscosity, and the resolution of a modeled object is high to offer superior modeling accuracy, as well as characteristics that a three-dimensionally modeled object, having a high toughness resisting to breakage, being superior in durability, and further not colored yellowish and having a high light transmittance to exhibit superior color tone and transparency, can be yielded.

Another object of the present invention is to provide a method for producing a three-dimensionaliy modeled object using the resin composition for optical three-dimensional modeling.

### Solution to Problem

The inventors investigated diligently to attain the objects. As the results it was found that in a case where a resin composition for optical three-dimensional modeling containing a radically polymerizable organic compound, a cationically polymerizable organic compound, a radical polymerization initiator, and a cationic polymerization initiator contained further as a part of a cationically polymerizable organic compound a poly(alkylene glycol) mono(meth)acrylate, in which either of hydroxy groups of a poly(alkylene glycol) was esterified with acrylic acid or methacrylic acid, the yellowness of a three-dimensionally modeled object obtained by optical modeling could be considerably lowered and the light transmittance of the same could be enhanced.

Based on the finding the inventors studied still further to find that in a case where to a resin composition for optical three-dimensional modeling containing a radically polymerizable organic compound, a cationically polymerizable organic compound, a radical polymerization initiator, and a cationic polymerization initiator, a poly(alkylene glycol) mono(meth)acrylate was added as a part of a radically polymerizable organic compound, and an oxetane compound was added as a part of a cationically polymerizable organic compound, a three-dimensionally modeled object obtained by optically modeling the resin composition for optical three-dimensional modeling containing the poly(alkylene glycol) mono(meth)acrylate, and the oxetane compound had, while maintaining a low yellowness and a high light transmittance intact, a higher impact strength, and a further improved toughness and durability compared to a case where only a poly(alkylene glycol) mono(meth)acrylate was added, thereby completing the present invention.

Namely, the present invention is:
(1) A resin composition for optical three-dimensional modeling comprising:
   (i) a radically polymerizable organic compound (A), a cationically polymerizable organic compound (B), a radical polymerization initiator (C), and a cationic polymerization initiator (D);
   (ii) a poly(alkylene glycol) mono(meth)acrylate (A-1) as a part of the radically polymerizable organic compound (A); and
   (iii) an oxetane compound (B-1) as a part of the cationically polymerizable organic compound (B).

The present invention is:
(2) The resin composition for optical three-dimensional modeling according to (1) above, comprising a monooxetane compound (B-1a) having an oxetane group, or comprising a monooxetane compound (B-1a) having an oxetane group and a polyoxetane compound (B-1b) having 2 or more oxetane groups, as the oxetane compound (B-1); and
(3) The resin composition for optical three-dimensional modeling according to (1) or (2) above, wherein the content of the poly(alkylene glycol) mono(meth)acrylate (A-1) based on the total mass of the radically polymerizable organic compound (A) is from 5 to 70 mass-%, and the content of the oxetane compound based on the total mass of the cationically polymerizable organic compound (B) is from 3 to 50 mass-%.

Further, the present invention is:
(4) The resin composition for optical three-dimensional modeling according to any one of (1) to (3) above, comprising a di(meth)acrylate compound (A-2) expressed by the following general formula (A-2) as a part of the radically polymerizable organic compound (A) at a content of from 10 to 95 mass-% based on the total mass of the radically polymerizable organic compound (A): 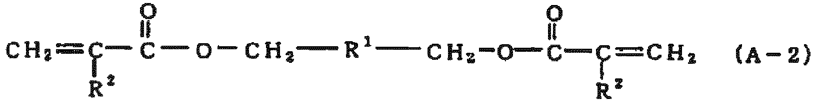 (wherein, R¹ represents a crosslinking cyclic hydrocarbon group, and R² represents a hydrogen atom, or a methyl group); and
(5) The resin composition for optical three-dimensional modeling according to any one of (1) to (4) above, comprising an alicyclic diglycidyl ether compound (B-2) expressed by the following general formula (B-2) as a part of the cationically polymerizable organic compound (B) at a content of from 10 to 97 mass-% based on the total mass of the cationically polymerizable organic compound (A): 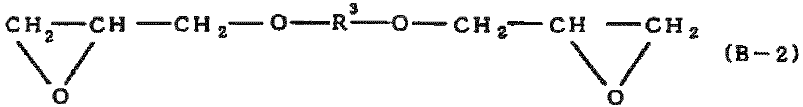 (wherein, R³ represents a hydrogenated bisphenol A residue, a hydrogenated bisphenol E residue, a hydrogenated bisphenol F residue, a hydrogenated bisphenol AD residue, a hydrogenated bisphenol Z residue, a cyclohexanedimethanol residue, or a tricyclodecanedimethanol residue).

Moreover, the present invention is:
(6) The resin composition for optical three-dimensional modeling according to any one of (1) to (5) above, comprising the radically polymerizable organic compound (A) at a content of from 10 to 50 mass-% based on the total mass of the resin composition for optical three-dimensional modeling, the cationically polymerizable organic compound (B) at a content of from 30 to 95 mass-%, the radical polymerization initiator (C) at a content of 0.1 to 10 mass-%, and the cationic polymerization initiator (D) at a content of from 0.1 to 10 mass-%.

Further, the present invention is:
(7) A method for producing an optically three-dimensionally modeled object using the resin composition for optical three-dimensional modeling according to any one of (1) to (6) above.

Further, the present invention is:
(8) A three-dimensionally modeled object obtained by optical modeling using the resin composition for optical three-dimensional modeling according to any one of (1) to (6) above.

### Advantageous Effects of Invention

By optical modeling using a resin composition for optical three-dimensional modeling according to the present invention containing a radically polymerizable organic compound (A), a cationically polymerizable organic compound (B), a radical polymerization initiator (C), and a cationic polymerization initiator (D), which contains further a poly(alkylene glycol) mono(meth)acrylate as a part of the radically polymerizable organic compound (A) and an oxetane compound as a part of the cationically polymerizable organic compound (B), a three-dimensionally modeled object having a high impact strength resisting to breakage and being superior in toughness, and durability can be produced. Moreover the three-dimensionally modeled object obtained using the resin composition for optical three-dimensional modeling according to the present invention has a low yellowness, a high light transmittance, a superior colorless transparent characteristic, and a favorable color tone and appearance.

Consequently, a resin composition for optical three-dimensional modeling according to the present invention can be used effectively for various applications, for which a three-dimensionally modeled object being superior in impact resistance, toughness, and durability, and at the same time having a high transparency, and being superior in appearance and color tone without yellowish coloring is required, such as a model for verifying an appearance design on various industrial products in the middle of a design work, a model for testing the function of a part, a resin mold for producing a casting mold, a base model for producing a mold, a lens for an automobile or a motorbike, a field of fine arts and crafts, including restoration and copying of an art work, a design presentation model for a contemporary art, or a glass-walled building, and a model for a high precision part, an electrical and electronic element, furniture, a building structure, an automobile part, various containers, a cast-metal object, etc.

### MODE FOR CARRYING OUT THE INVENTION

The present invention will be described below in detail.

A resin composition for optical three-dimensional modeling according to the present invention is a resin composition to be used for producing a three-dimensionally modeled object by performing three-dimensional modeling through irradiation with an active energy ray such as light.

A resin composition for optical three-dimensional modeling according to the present invention contains a radically polymerizable organic compound (A), and a cationically polymerizable organic compound (B) as active energy ray-polymerizable compounds, which polymerize by irradiation with an active energy ray such as light.

In this regard, "active energy ray" means herein an energy ray, such as ultraviolet light, electron beam, X-ray, radiation, and high-frequency wave, which can cure a resin composition for optical three-dimensional modeling.

A radically polymerizable organic compound (A) to be used according to the present invention is a compound, which causes a polymerization reaction and/or a crosslinking reaction when irradiated with an active energy ray such as light in the presence of a radical polymerization initiator (C). A resin composition for optical three-dimensional modeling according to the present invention contains a poly(alkylene glycol) mono(meth)acrylate (A-1) as a part of the radically polymerizable organic compound (A).

Examples of a poly(alkylene glycol) mono(meth)acrylate (A-1) to be used according to the present invention include poly(ethylene glycol) monoacrylate, poly(ethylene glycol) monomethacrylate, poly(propylene glycol) monoacrylate, poly(propylene glycol) monomethacrylate, monoacrylate of poly(oxyethylene-*ran*-oxypropylene) diol, monomethacrylate of poly(oxyethylene-*ran*-oxypropylene) diol, monoacrylate or monomethacrylate of a block copolymer (block copolymer diol), which has hydroxy groups at both the ends of a copolymer bonding a polyoxyethylene polymer block and a polyoxypropylene polymer block, poly(tetramethylene glycol) monoacrylate, poly(tetramethylene glycol) monomethacrylate, monoacrylate of a random copolymer diol, which has hydroxy groups at both the ends of a copolymer bonding randomly ethylene oxide units and tetramethylene oxide units, monomethacrylate of a random copolymer diol, which has hydroxy groups at both the ends of a copolymer bonding randomly ethylene oxide units and tetramethylene oxide units, and monoacrylate or monomethacrylate of a block copolymer (block copolymer diol), which has hydroxy groups at both the ends of a copolymer bonding a polyoxyethylene polymer block and a poly(tetramethylene glycol) polymer block.

Among them 1, or 2 or more kinds out of poly(ethylene glycol) monoacrylate, poly(ethylene glycol) monomethacrylate, poly(propylene glycol) monoacrylate, and poly(propylene glycol) monomethacrylate, and especially 1 or 2 kinds out of poly(ethylene glycol) monoacrylate, and poly(propylene glycol) monoacrylate are used preferably as the poly(alkylene glycol) mono(meth)acrylate (A-1) according to the present invention from viewpoints of availability , a handling property such as liquid form at room temperature, and the like.

According to the present invention from viewpoints of superior solubility in a resin composition for optical three-dimensional modeling, blendability, and physical properties after light curing, such as toughness and durability, as the poly(alkylene glycol) mono(meth)acrylate (A-1), a poly(alkylene glycol) mono(meth)acrylate with an average molecular weight of from 80 to 1,000, in which either of hydroxy groups of a poly(alkylene glycol) is esterified with acrylic acid or methacrylic acid, is used preferably, and a poly(alkylene glycol) mono(meth)acrylate with an average molecular weight of from 80 to 800, in which either of hydroxy groups of a poly(alkylene glycol) is esterified with acrylic acid or methacrylic acid, is used more preferably. When the molecular weight of a poly(alkylene glycol) mono(meth)acrylate (A-1) is too small, a three-dimensionally modeled object obtained by light curing comes to have a too low impact strength, which is apt to lead to low toughness or plasticity. Meanwhile, when the molecular weight of a poly(alkylene glycol) mono(meth)acrylate (A-1) is too large, the solubility into a resin composition for optical three-dimensional modeling may be decreased, the viscosity of a resin composition for optical three-dimensional modeling, to which the poly(alkylene glycol) mono(meth)acrylate (A-1) is added, is apt to increase, or a light-cured product is apt to lose transparency.

The reason why addition of a poly(alkylene glycol) mono(meth)acrylate (A-1) together with an oxetane compound to a resin composition for optical three-dimensional modeling according to the present invention can enhance the impact strength of a three-dimensionally modeled object obtained by optical modeling so as to improve the toughness and durability, while maintaining the yellowness of the three-dimensionally modeled object low and the light transmittance high, is presumed that a (meth)acrylate moiety, which polymerizes radically, and a hydroxy functional moiety, which enters into a chain transfer reaction through a cationic polymerization, existing in a molecule constitute a sea-island structure, which contributes to improvement of the toughness, in a three-dimensionally modeled object and further the size of the sea-island structure is not so large as to scatter visible light.

Specific examples of a poly(alkylene glycol) mono(meth)acrylate (A-1) to be used preferably according to the present invention include, but not limited to:
"BLEMMER AE90" produced by Nippon Oil & Fats Co., Ltd. (monoacrylate of poly(ethylene glycol): bonded number of ethylene oxide units ≈ 2, average molecular weight: approx. 90);
"BLEMMER AE200" produced by Nippon Oil & Fats Co., Ltd. (monoacrylate of poly(ethylene glycol): bonded number of ethylene oxide units ≈ 4.5, average molecular weight: approx. 200);
"BLEMMER AE400" produced by Nippon Oil & Fats Co., Ltd. (monoacrylate of poly(ethylene glycol): bonded number of ethylene oxide units ≈ 10, average molecular weight: approx. 400);
"BLEMMER PE90" produced by Nippon Oil & Fats Co., Ltd. (monomethacrylate of poly(ethylene glycol): bonded number of ethylene oxide units ≈ 2, average molecular weight: approx. 90);
"BLEMMER PE200" produced by Nippon Oil & Fats Co., Ltd. (monomethacrylate of poly(ethylene glycol): bonded number of ethylene oxide units ≈ 4.5, average molecular weight: approx. 200);
"BLEMMER PE350" produced by Nippon Oil & Fats Co., Ltd. (monomethacrylate of poly(ethylene glycol): bonded number of ethylene oxide units ≈ 8, average molecular weight: approx. 350);
"BLEMMER AP150" produced by Nippon Oil & Fats Co., Ltd. (monoacrylate of poly(propylene glycol): bonded number of propylene oxide units ≈ 3, average molecular weight: approx. 150);
"BLEMMER AP400" produced by Nippon Oil & Fats Co., Ltd. (monoacrylate of poly(propylene glycol): bonded number of propylene oxide units ≈ 6, average molecular weight: approx. 400);
"BLEMMER AP550" produced by Nippon Oil & Fats Co., Ltd. (monoacrylate of poly(propylene glycol): bonded number of propylene oxide units ≈ 9, average molecular weight: approx. 550);
"BLEMMER AP800" produced by Nippon Oil & Fats Co., Ltd. (monoacrylate of poly(propylene glycol): bonded number of propylene oxide units ≈ 13, average molecular weight: approx. 800);
"BLEMMER PP500" produced by Nippon Oil & Fats Co., Ltd. (monomethacrylate of poly(propylene glycol): bonded number of propylene oxide units ≈ 9, average molecular weight: approx. 500); and
"BLEMMER PP800" produced by Nippon Oil & Fats Co., Ltd. (monomethacrylate of poly(propylene glycol): bonded number of propylene oxide units ≈ 13, average molecular weight: approx. 800).

Specific examples of a poly(alkylene glycol) mono(meth)acrylate (A-1) to be used preferably according to the present invention further include:
"BLEMMER 10AEP550B" produced by Nippon Oil & Fats Co., Ltd. (poly(ethylene glycol)-poly(propylene glycol) monoacrylate: bonded number of ethylene oxide unit ≈ 1, bonded number of propylene oxide units ≈ 9, average molecular weight: approx. 550);
"BLEMMER 10PEP550B" produced by Nippon Oil & Fats Co., Ltd. (monomethacrylate of poly(ethylene glycol)-poly(propylene glycol): bonded number of ethylene oxide unit ≈ 1, bonded number of propylene oxide units ≈ 9, average molecular weight: approx. 550);
"BLEMMER 55PET400" produced by Nippon Oil & Fats Co., Ltd. (monomethacrylate of poly(ethylene glycol)-(tetramethylene glycol): bonded number of ethylene oxide units ≈ 5, bonded number of tetramethylene glycol units ≈ 3, average molecular weight: approx. 400);
"BLEMMER 55AET800" produced by Nippon Oil & Fats Co., Ltd. (poly(ethylene glycol)-(tetramethylene glycol) monoacrylate: bonded number of ethylene oxide units ≈ 10, bonded number of tetramethylene glycol units ≈ 5, average molecular weight: approx. 800);
"BLEMMER 55PET800" produced by Nippon Oil & Fats Co., Ltd. (monomethacrylate of poly(ethylene glycol)-(tetramethylene glycol): bonded number of ethylene oxide units ≈ 10, bonded number of tetramethylene glycol units ≈ 5, average molecular weight: approx. 800);
"BLEMMER 30PPT800" produced by Nippon Oil & Fats Co., Ltd. (poly(propylene glycol)-(tetramethylene glycol) monomethacrylate: bonded number of propylene oxide units ≈ 4, bonded number of tetramethylene glycol units ≈ 8, average molecular weight: approx. 800);
"BLEMMER 50APT800" produced by Nippon Oil & Fats Co., Ltd. (poly(propylene glycol)-(tetramethylene glycol) monoacrylate: bonded number of propylene oxide units ≈ 7, bonded number of tetramethylene glycol units ≈ 5.5, average molecular weight: approx. 800);
"BLEMMER 50PPT800" produced by Nippon Oil & Fats Co., Ltd. (monomethacrylate of poly(propylene glycol)-(tetramethylene glycol): bonded number of propylene oxide units ≈ 7, bonded number of tetramethylene glycol units ≈ 5.5, average molecular weight: approx. 800); and
"BLEMMER 70PPT800" produced by Nippon Oil & Fats Co., Ltd. (poly(propylene glycol)-(tetramethylene glycol) monomethacrylate: bonded number of propylene oxide units ≈ 10, bonded number of tetramethylene glycol units ≈ 3, average molecular weight: approx. 800).

Among the above poly(alkylene glycol) mono(meth)acrylates, BLEMMER AE90, BLEMMER AE200, BLEMMER AE400, BLEMMER AP150, BLEMMER AP400, and BLEMMER AP550 are used preferably from a viewpoint of availability.

The content of a poly(alkylene glycol) mono(meth)acrylate (A-1) in a resin composition for optical three-dimensional modeling is preferably from 5 to 70 mass-% based on the total mass of the radically polymerizable organic compound (the total mass of a radically polymerizable organic compound contained in a resin composition for optical three-dimensional modeling), more preferably from 10 to 55 mass-%, and further preferably from 20 to 40 mass-%.

When the content of a poly(alkylene glycol) mono(meth)acrylate (A-1) is too low, the impact strength of a three-dimensionally modeled object yielded by optical modeling is decreased so that the toughness of the three-dimensionally modeled object is apt to be reduced, and further the yellowness of the three-dimensionally modeled object is increased so that the light transmittance is apt to be lowered.

On the other hand, when the content of a poly(alkylene glycol) mono(meth)acrylate (A-1) is too high, the plasticity of a three-dimensionally modeled object yielded by optical modeling becomes excessive, so that the heat resistance and stiffness of the three-dimensionally modeled object are apt to decrease.

A resin composition for optical three-dimensional modeling according to the present invention contains as a radically polymerizable organic compound (A) in addition to a poly(alkylene glycol) mono(meth)acrylate (A-1)another radically polymerizable organic compound.

As such another radically polymerizable organic compound, any radically polymerizable organic compound usable for a resin composition for optical three-dimensional modeling, other than a poly(alkylene glycol) mono(meth)acrylate (A-1), may be used. Examples of another radically polymerizable organic compound include a compound having a (meth)acrylate group other than a poly(alkylene glycol) mono(meth)acrylate, an unsaturated polyester compound, an allyl urethane compound, and a polythiol compound. The radically polymerizable organic compounds may be used singly or 2 or more kinds together.

Among them, as another radically polymerizable organic compound, a compound having at least one (meth)acryloyloxy group in a molecule other than a poly(alkylene glycol) mono(meth)acrylate (A-1) is used preferably. Specific examples thereof include a (meth)acrylic acid ester of an alcohol, a reaction product between an epoxy compound and (meth)acrylic acid, a urethane (meth)acrylate, a polyester (meth)acrylate, and a polyether (meth)acrylate.

Examples of the (meth)acrylic acid ester of an alcohol include (meth)acrylates to be obtained by reactions of an aromatic alcohol, an aliphatic alcohol, an alicyclic alcohol having at least one hydroxy group in a molecule, and/or an alkylene oxide adduct thereof with (meth)acrylic acid.

More specifically, examples of the (meth)acrylic acid ester of an alcohol include a di(meth)acrylate compound (A-2) having a crosslinking cyclic hydrocarbon group in a molecule, expressed by the following general formula (A-2). 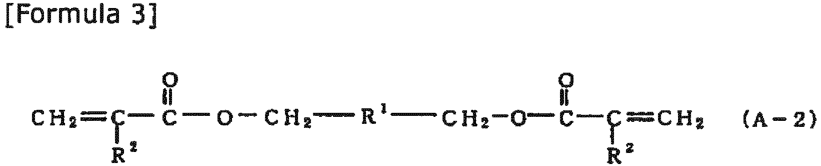 (wherein, R¹ represents a crosslinking cyclic hydrocarbon group, and R² represents a hydrogen atom or methyl group).

A "crosslinking cyclic hydrocarbon group" expressed by R¹ in the general formula (A-2) means a "divalent polyalicyclic hydrocarbon group, in which 2 or more carbon atoms are shared by 2 adjacent alicyclic rings".

Specific examples of a crosslinking cyclic hydrocarbon group R¹ include a tricyclodecanylene group [the following chemical formula (a)], an adamantylene group (tricyclo[3.3.1.1^{3,7}]decyl group) [the following chemical formula (b)], an isobornylene group [the following chemical formula (c)], a bicyclononylene group [the following chemical formula (d)], a bicyclo[2.1.0]pentylene group [the following chemical formula (e)], a bicyclo[3.2.1]octylene group [the following chemical formula (f)], and a tricyclo[2.2.1.0^{2,6}]heptylene group [the following chemical formula (g)]. The crosslinking cyclic hydrocarbon groups may be, if necessary, substituted with an alkyl group, a halogen, an alkoxyl group, etc.

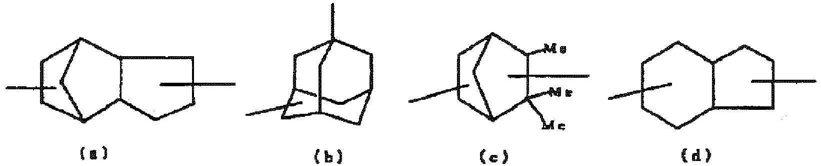

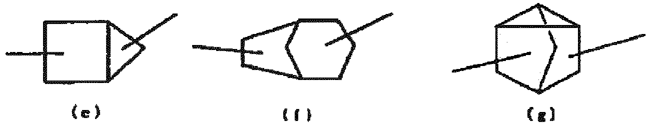

Specific examples of a di(meth)acrylate compound (A-2) having a crosslinking cyclic hydrocarbon group include tricyclodecane dimethanol di(meth)acrylate, in which R¹ is a tricyclodecanylene group, adamantane dimethanol di(meth)acrylate, in which R¹ is an adamantylene group, isobornene dimethanol di(meth)acrylate, in which R¹ is an isobornylene group, bicyclononane dimethanol di(meth)acrylate, in which R¹ is a bicyclononylene group, bicyclo[2.1.0]pentane dimethanol di(meth)acrylate, in which R¹ is a bicyclo[2.1.0]pentylene group, bicyclo[3.2.1]octane dimethanol di(meth)acrylate, in which R¹ is a bicyclo[3.2.1]octylene group, and tricyclo[2.2.1.02,6]heptane dimethanol di(meth)acrylate, in which R¹ is a tricyclo[2.2.1.02,6]heptylene group.

Among them, tricyclodecane dimethanol diacrylate expressed by the following chemical formula (A-2a) may be used preferably as a di(meth)acrylate compound (A-2) from viewpoints of availability, improvement effect on the heat resistance and stiffness of a three-dimensionally modeled object obtained by optical modeling, and possibility of long term preservation.

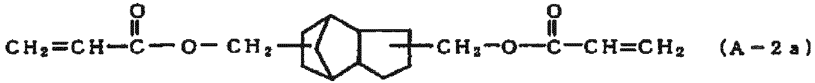

Meanwhile, examples of a (meth)acrylic acid ester of an alcohol include in addition to the above di(meth)acrylate compound (A-2) having a crosslinking cyclic hydrocarbon group in a molecule, a di(meth)acrylate of a bisphenol compound, such as bisphenol A and bisphenol S, or a bisphenol compound, such as bisphenol A or bisphenol S, a benzene ring of which is substituted with an alkoxy group, *etc.* 2-ethylhexyl (meth)acrylate, 2-hydroxyethyl (meth)acrylate, 2-hydroxypropyl (meth)acrylate, lauryl (meth)acrylate, stearyl (meth)acrylate, isooctyl (meth)acrylate, tetrahydrofurfuryl (meth)acrylate, isobornyl (meth)acrylate, benzyl (meth)acrylate, 1,4-butanediol di(meth)acrylate, 1,6-hexanediol di(meth)acrylate, diethylene glycol di(meth)acrylate, triethylene glycol di(meth)acrylate, neopentyl glycol di(meth)acrylate, poly(alkylene glycol) di(meth)acrylate [for example, poly(ethylene glycol) di(meth)acrylate, poly(propylene glycol) di(meth)acrylate, and poly(tetramethylene glycol) di(meth)acrylate], a poly(meth)acrylate of a polyhydric alcohol having 3 or more hydroxy groups, such as trimethylolpropane tri(meth)acrylate, ditrimethylolpropane tetra(meth)acrylate, pentaerythritol tetra(meth)acrylate, and dipentaerythritol hexa(meth)acrylate, and a (meth)acrylate of an alkylene oxide adduct of the above polyhydric alcohols, such as a diol, a triol, a tetraol, and a hexaol.

The reaction product between an epoxy compound and (meth)acrylic acid may be, for example, a (meth)acrylate reaction product yielded by a reaction of an aromatic epoxy compound, an alicyclic epoxy compound, and/or an aliphatic epoxy compound with (meth)acrylic acid, and specific examples thereof include (meth)acrylate to be yielded by reacting (meth)acrylic acid with glycidyl ether to be yielded by reacting an epoxidizing agent such as epichlorohydrin with a bisphenol compound, such as bisphenol A and bisphenol S, a bisphenol compound of bisphenol A or bisphenol S, the benzene ring of which is substituted with an alkoxy group, or the like, or an alkylene oxide adduct of the bisphenol compound or the substituted bisphenol compound, and a (meth)acrylate reaction product yielded by reacting (meth)acrylic acid with an epoxy novolac resin.

The urethane (meth)acrylate may be, for example, (meth)acrylate yielded by reacting an isocyanate compound with a (meth)acrylic acid ester having a hydroxy group. As the (meth)acrylic acid ester having a hydroxy group, a (meth)acrylic acid ester having a hydroxy group yielded by an esterification reaction of an aliphatic divalent alcohol and (meth) acrylic acid is preferable, and specific examples include 2-hydroxyethyl (meth)acrylate. Meanwhile, as the isocyanate compound, a polyisocyanate compound having 2 or more isocyanate groups in a molecule, such as tolylene diisocyanate, hexamethylene diisocyanate, and isophorone diisocyanate.

The polyester (meth)acrylate may be, for example, a polyester (meth)acrylate yielded by a reaction between (meth)acrylic acid and a polyester having a hydroxy group.

The polyether (meth)acrylate may be, for example, a polyether acrylate yielded by a reaction between acrylic acid and a polyether having a hydroxy group.

A resin composition for optical three-dimensional modeling according to the present invention contains the di(meth)acrylate compound (A-2) having a crosslinking cyclic hydrocarbon group in the molecule preferably at a content of from 10 to 95 mass-% based on the total mass of the radically polymerizable organic compound (A) contained in the resin composition for optical three-dimensional modeling, and more preferably at a content of from 20 to 80 mass-%.

When a di(meth)acrylate compound (A-2) is contained at the range based on the total mass of the radically polymerizable organic compound (A), the heat resistance of an optically modeled object obtained from the resin composition for optical three-dimensional modeling can be prevented from deterioration, and further the viscosity of the resin composition for optical three-dimensional modeling can be lowered so that the handling property during optical three-dimensional modeling can be favorable.

When a di(meth)acrylate compound (A-2) having a crosslinking cyclic hydrocarbon group is added into a resin composition for optical three-dimensional modeling according to the present invention together with a poly(alkylene glycol) mono(meth)acrylate (A-1) as a radically polymerizable organic compound (A), it is preferable to add further a radically polymerizable organic compound, for example, a dipentaerythritol polyacrylate, such as dipentaerythritol hexaacrylate, and dipentaerythritol pentaacrylate; a polyacrylate of an alkylene oxide-modified polyhydric alcohol (e.g. alkylene oxide-modified pentaerythritol, or trimethylol propane), such as ethylene oxide-modified pentaerythritol tetraacrylate, ethylene oxide-modified trimethylolpropane triacrylate, propylene oxide-modified pentaerythritol tetraacrylate, and propylene oxide-modified trimethylolpropane triacrylate; an epoxy acrylate yielded by reacting bisphenol A diglycidyl ether and acrylic acid (*e.g*. "VR-77" produced by Showa Highpolymer Co., Ltd.); isobornyl acrylate; lauryl acrylate; and isostearyl acrylate, for the sake of improvement of the reactivity, the mechanical properties, *etc*. of a modeled object.

A cationically polymerizable organic compound (B) to be used according to the present invention is a compound, which initiates a polymerization reaction and/or a crosslinking reaction when the same is irradiated with an active energy ray such as light in the presence of a cationic polymerization initiator (D), and an oxetane compound (B-1) is contained as a part of a cationically polymerizable organic compound (B) according to the present invention.

As an oxetane compound (B-1), 1, or 2 or more kinds out of a monooxetane compound (B-1a) having an oxetane group in a molecule, and a polyoxetane compound (B-1b) having 2, 3, 4, or more oxetane groups in a molecule may be used.

In this case, as a monooxetane compound (B-1a), any compound having an oxetane group in a molecule may be used, and a monooxetane monoalcohol compound having an oxetane group and an alcoholic hydroxy group in a molecule may be used preferably.

Among such monooxetane monoalcohol compounds, at least one kind out of a monooxetane monoalcohol compound (B-1a₁) expressed by the following general formula (B-1a₁) and a monooxetane monoalcohol compound (B-1a₂) expressed by the following general formula(B-1a₂) is used more preferably as a monooxetane compound from viewpoints of easy availability, high reactivity, and low viscosity. 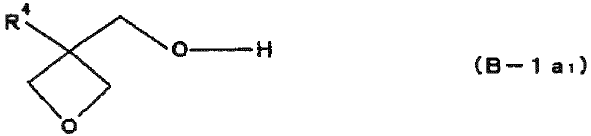 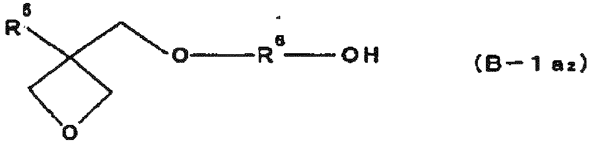 (wherein, R⁴ and R⁵ represent a C1 to C5 alkyl group, R⁶ represents a C2 to C10 alkylene group, which may have an ether bond).

Examples of R⁴ in the general formula (B-1a₁) include methyl, ethyl, propyl, butyl, and pentyl.

Specific examples of a monooxetane alcohol (B-1a₁) include 3-hydroxymethyl-3-methyloxetane, 3-hydroxymethyl-3-ethyloxetane, 3-hydroxymethyl-3-propyloxetane, 3-hydroxymethyl-3-*n*-butyloxetane, and 3-hydroxymethyl-3-propyloxetane, which may be used singly or in combination of 2 or more kinds thereof. Among them, from viewpoints of easy availability, reactivity, etc., 3-hydroxymethyl-3-methyloxetane, and 3-hydroxymethyl-3-ethyloxetane are used more preferably.

Examples of R⁵ in the general formula (B-1a₂) include methyl, ethyl, propyl, butyl, and pentyl.

Meanwhile, R⁶ in the general formula (B-1a₂) may be either of a straight-chain alkylene group or a branched-chain alkylene group, insofar as it is a C2 to C10 alkylene group, or may be a C2 to C10 straight-chain or branched-chain alkylene group having an ether bond (ether-type oxygen atom) in the middle of an alkylene group (alkylene chain). Specific examples of R²⁴ include an ethylene group, a trimethylene group, a tetramethylene group, a pentamethylene group, a hexamethylene group, a heptamethylene group, and a 3-oxypentylene group. Among them R⁶ is preferably a trimethylene group, a tetramethylene group, a pentamethylene group, or a heptamethylene group from viewpoints of easy synthesis and easy handling because a compound can be liquid at normal temperature.

As a polyoxetane compound (B-1b) any of a compound having 2 oxetane groups, a compound having 3 oxetane groups, and a compound having 4, or 4 or more oxetane groups may be used, however dioxetane compounds having 2 oxetane groups are favorably used, and among them a dioxetane compound (B-1b₀) expressed by the following general formula (B-1b₀) is preferably used from viewpoints of availability, reactivity, low hygroscopicity, and mechanical properties of a cured product. 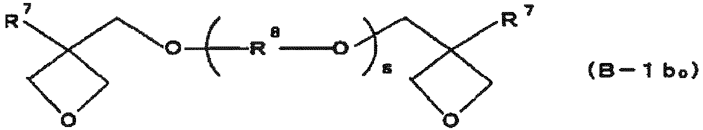 (wherein, two R⁷, the same or different, represent a C1 to C5 alkyl group, R⁸ represents a divalent organic group, which may or may not have an aromatic ring, and s represents 0 or 1).

Examples of R⁷ in the general formula (B-1b₀) include methyl, ethyl, propyl, butyl, and pentyl. Examples of R⁸ include a C1 to C12 straight-chain or branched-chain alkylene group (such as an ethylene group, a propylene group, a butylene group, a neopentylene group, a *n*-pentamethylene group, and a *n*-hexamethylene group), a divalent group expressed by the formula: -CH₂-Ph-CH₂- or -CH₂-Ph-Ph-CH₂-, a hydrogenated bisphenol A residue, a hydrogenated bisphenol F residue, a hydrogenated bisphenol AD residue, a hydrogenated bisphenol Z residue, a cyclohexanedimethanol residue, a tricyclodecanedimethanol residue, a terephthalic acid residue, an isophthalic acid residue, and an *o*-phthalic acid residue.

Specific examples of a dioxetane compound (B-1b₀) include dioxetane compounds expressed by the following formula (B-1b₁) or formula (B-1b₂). 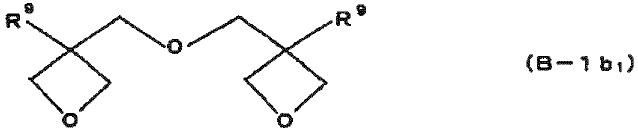 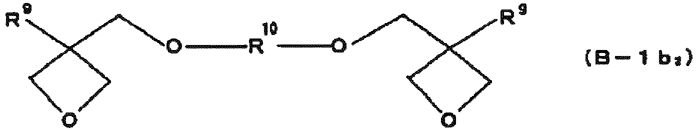 (wherein, two R⁹, the same or different, represent a C1 to C5 alkyl group, and R¹⁰ represents a divalent organic group, which may or may not have an aromatic ring).

Specific examples of a dioxetane compound expressed by the formula (B-1b₁) include bis[3-methyl(3-oxetanyl)methyl]ether, bis[3-ethyl(3-oxetanyl)methyl]ether, bis[3-propyl(3-oxetanyl)methyl]ether, and bis[3-butyl(3-oxetanyl)methyl]ether.

Specific examples of a dioxetane compound expressed by the formula (B-1b₂) include dioxetane compounds, in which two R⁹ in the formula (B-1b₂) are both a methyl, ethyl, propyl, butyl or pentyl group, and R¹⁰ is an ethylene group, a propylene group, a butylene group, a neopentylene group, a *n*-pentamethylene group, a *n*-hexamethylene group, a divalent group expressed by the formula: -CH₂-Ph-CH₂- or -CH₂-Ph-Ph-CH₂-, a hydrogenated bisphenol A residue, a hydrogenated bisphenol F residue, a hydrogenated bisphenol AD residue, a hydrogenated bisphenol Z residue, a cyclohexanedimethanol residue, a tricyclodecanedimethanol residue, a terephthalic acid residue, an isophthalic acid residue, and an *o*-phthalic acid residue.

Among them, as a polyoxetane compound (B-1b₀), bis[3-methyl(3-oxetanyl)methyl]ether and/or bis[3-ethyl(3-oxetanyl)methyl]ether, in which two R⁹ in Formula (B-1b₁) are both a methyl group or an ethyl group, is preferably used from viewpoints of easy availability, low hygroscopicity, and mechanical properties of a cured product, and especially bis[3-ethyl(3-oxetanyl)methyl]ether is used more preferably.

A resin composition for optical three-dimensional modeling according to the present invention should preferably contain an oxetane compound (B-1) at a content of from 3 to 50 mass-% based on the total mass of a cationically polymerizable organic compound (B) contained in the resin composition for optical three-dimensional modeling [the total mass of all cationically polymerizable organic compounds (B) contained in the resin composition for optical three-dimensional modeling], more preferably at a content of from 5 to 40 mass-%, and further preferably at a content of from 10 to 30 mass-% from viewpoints of the light curing performance of a resin composition for optical three-dimensional modeling, improvement of a modeling property by reduction of viscosity, and the mechanical properties such as impact strength of a three-dimensionally modeled object obtained by optical modeling.

A resin composition for optical three-dimensional modeling according to the present invention should preferably contain as an oxetane compound (B-1) solely a monooxetane compound, or both of a monooxetane compound and a polyoxetane compound, since the impact strength of a three-dimensionally modeled object obtained by optical modeling is enhanced, the yellowness is lowered, and the light transmittance is increased.

When a monooxetane compound (B-1a) and a polyoxetane compound (B-1b) are contained as an oxetane compound (B-1), the two are preferably contained at a mass ratio of monooxetane compound (B-1a):polyoxetane compound (B-1b) = 95:5 to 5:95, and more preferably at a mass ratio of 90:10 to 20:80.

A resin composition for optical three-dimensional modeling according to the present invention should preferably contain as a cationically polymerizable organic compound (B) in addition to an oxetane compound (B-1) another cationically polymerizable organic compound.

As another cationically polymerizable organic compound, any compound may be used insofar as it is an organic compound which initiates a cationic polymerization reaction and/or a cationic crosslinking reaction when irradiated with an active energy ray such as light in the presence of a cationic polymerization initiator (D).

Representative examples of such other cationically polymerizable organic compound to be used together with an oxetane compound (B-1) according to the present invention include an epoxy compound, a cyclic ether compound other than an oxetane compound, a cyclic acetal compound, a cyclic lactone compound, a spiro orthoester compound, and a vinyl ether compound. The cationically polymerizable organic compounds may be used singly, or in combination of 2 or more kinds thereof.

Among them, an epoxy compound is used preferably as such other cationically polymerizable organic compound to be used with an oxetane compound (B-1) according to the present invention.

Examples of an epoxy compound, which can be used as a cationically polymerizable organic compound (B) according to the present invention, include epoxy compounds, such an alicyclic epoxy compound, an aliphatic epoxy compound, and an aromatic epoxy compound.

Examples of the alicyclic epoxy compound include a polyglycidyl ether of a polyhydric alcohol having at least one alicyclic ring, and a compound including a cyclohexene oxide structure, or a compound including cyclopentene oxide structure to be yielded by epoxidizing a compound having a cyclohexene ring, or a compound having a cyclopentene ring using an appropriate oxidation agent, such as hydrogen peroxide, and peracid. More specifically, an alicyclic epoxy compound may include an alicyclic diglycidyl ether compound expressed by the following general formula (B-2) (hereinafter referred to as "alicyclic diglycidyl ether compound (B-2)"). 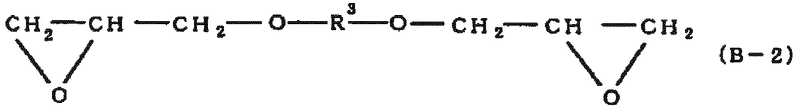 (wherein, R³ represents a hydrogenated bisphenol A residue, a hydrogenated bisphenol F residue, a hydrogenated bisphenol Z residue, a hydrogenated bisphenol AD residue, a cyclohexanedimethanol residue, or a tricyclodecanedimethanol residue).

Examples of an alicyclic diglycidyl ether compound (B-2) include hydrogenated bisphenol A diglycidyl ether, hydrogenated bisphenol F diglycidyl ether, hydrogenated bisphenol AD diglycidyl ether, hydrogenated bisphenol Z diglycidyl ether, cyclohexanedimethanol diglycidyl ether, and tricyclodecanedimethanol diglycidyl ether.

Examples of a compound including a cyclohexene oxide structure, or a compound including a cyclopentene oxide structure include 3,4-epoxycyclohexylmethyl-3',4'-epoxycyclohexanecarboxylate, 3,4-epoxy-1-methylcyclohexyl-3,4-epoxy-1-methyl cyclohexanecarboxylate, 6-methyl-3,4-epoxycyclohexylmethyl-6-methyl-3,4-epoxycycloh exanecarboxylate, 3,4-epoxy-3-methylcyclohexylmethyl-3,4-epoxy-3-methyl cyclohexanecarboxylate, 3,4-epoxy-5-methylcyclohexylmethyl-3,4-epoxy-5-methyl cyclohexanecarboxylate, 2-(3,4-epoxycyclohexyl-5,5-spiro-3,4-epoxy)cyclohexane-*meta-*dioxane, bis(3,4-epoxycyclohexylmethyl)adipate, 3,4-epoxy-6-methylcyclohexyl carboxylate, dicyclopentadiene diepoxide, ethylene bis(3,4-epoxycyclohexanecarboxylate), dioctyl epoxy hexahydrophthalate, and di-2-ethylhexyl epoxy hexahydrophthalate.

Examples include further ε-caprolactone-modified 3',4'-epoxycyclohexylmethyl 3,4-epoxycyclohexanecarboxylate, and an adduct of 1,2-epoxy-4-(2-oxiranyl)cyclohexane to 2,2-bis(hydroxymethyl)-1-butanol sold from Daicel Chemical Industries, Ltd.

Examples include further bis(3,4-epoxycyclohexyl)methane, 2,2-bis(3,4-epoxycyclohexyl)propane, 1,1-bis(3,4-epoxycyclohexyl)ethane, α-pinene oxide, campholenaldehyde, limonene monoxide, limonene dioxide, 4-vinyl cyclohexene monoxide, and 4-vinyl cyclohexene dioxide.

There is no particular restriction on the aliphatic epoxy compound usable as a cationically polymerizable organic compound (A), and examples of the aliphatic epoxy compound include a polyglycidyl ether of an aliphatic polyhydric alcohol, or an alkylene oxide adduct thereof, a polyglycidyl ether of an aliphatic long-chain polybasic acid, a homopolymer synthesized by a vinyl polymerization of glycidyl acrylate, or glycidyl methacrylate, and a copolymer synthesized by a vinyl polymerization of glycidyl acrylate and/or glycidyl methacrylate and another vinyl monomer.

Examples of a representative compound include, butyl glycidyl ether, 2-ethylhexyl glycidyl ether, a glycidyl ether of a higher alcohol, and a glycidyl ether of a polyhydric alcohol, such as a diglycidyl ether of an alkylene diol (*e.g*. diglycidyl ether of 1,4-butanediol, diglycidyl ether of 1,6-hexane diol, and diglycidyl ether of neopentyl glycol), triglycidyl ether of glycerine, diglycidyl ether of trimethylolpropane, triglycidyl ether of trimethylolpropane, tetraglycidyl ether of sorbitol, hexaglycidyl ether of dipentaerythritol, diglycidyl ether of poly(ethylene glycol), diglycidyl ether of poly(propylene glycol), and diglycidyl ether of polytetramethylene glycol.

Examples include further a polyglycidyl ether of a polyether polyol to be yielded by adding 1, or 2 or more kinds of alkylene oxides to an aliphatic polyhydric alcohol, such as propylene glycol, trimethylolpropane, and glycerine, and a diglycidyl ester of an aliphatic long-chain dibasic acid.

Examples include further a monoglycidyl ether of an aliphatic higher alcohol, a monoglycidyl ether of phenol, cresol, butylphenol, and a polyether alcohol to be yielded by adding an alkylene oxide thereto, a glycidyl ester of a higher fatty acid, an epoxidized soybean oil, butyl epoxy stearate, epoxidized polybutadiene, and glycidylized poly butadiene.

Meanwhile, examples of an epoxy alkane include 1,2-epoxy decane, 1,2-epoxy dodecane, 1,2-epoxy tetradecane, 1,2-epoxy cetane, 1,2-epoxy octadecane, and 1,2-epoxy icosane.

There is no particular restriction on the aromatic epoxy compound, and examples thereof include a polyglycidyl ether and a polyglycidyl ester of a polyhydric phenol, and an alkylene oxide adduct thereof. Specific examples include a glycidyl ether of bisphenol A, bisphenol E, bisphenol F, bisphenol AD, and bisphenol Z, and compounds to be yielded by adding thereto further an alkylene oxide, such as ethylene oxide and propylene oxide, phenyl glycidyl ether, *tert*-butylphenyl glycidyl ether, resorcinol diglycidyl ether, tetraglycidyl ether of tetraphenolethane, triglycidyl ether of triphenolmethane, a glycidylization product of a condensation product between a phenol or a naphthol and an aldehyde (*e.g*. a phenol resin and a novolac resin), a glycidylization product of a condensation product between a phenol and isopropenyl acetophenone, a glycidylization product of a reaction product between a phenol and dicyclopentadiene, diglycidyl ester of terephthalic acid, diglycidyl ester of isophthalic acid, and diglycidyl ester of *o*-phthalic acid.

Examples include further diglycidyl ether of biphenol, diglycidyl ether of tetramethyl biphenol, VG3101L sold by Printec Corporation expressed by the following chemical formula ([2-[4-(2,3-epoxypropoxy)phenyl]-2-[4-[1,1-bis[4-([2,3-epoxyp ropoxy]phenyl]ethyl]phenyl]propane]), and other aromatic epoxy compounds.

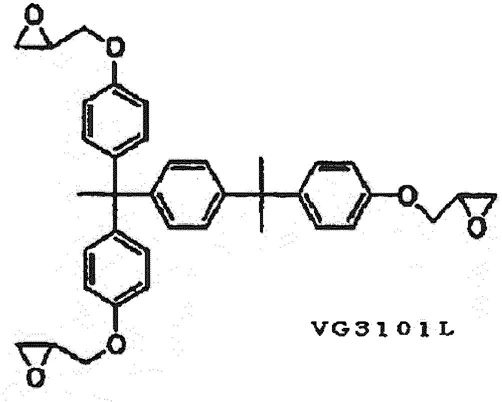

As a cationically polymerizable organic compound (B) according to the present invention, 1, or 2 or more kinds of the above epoxy compounds may be used, and a polyepoxy compound having 2 or more epoxy groups in a molecule is preferably included at a percentage of from 30 to 97 mass-%, especially 40 to 80 mass-%, based on the total mass of a cationically polymerizable organic compound (B).

When a resin composition for optical three-dimensional modeling according to the present invention contains an alicyclic diglycidyl ether compound (B-2) expressed by the general formula (B-2) together with an oxetane compound (B-1) as a cationically polymerizable organic compound (B), in general the transparency of a three-dimensionally modeled object obtained by optical modeling is further enhanced, the yellowness is further reduced, and the time-dependent dimensional stability, water resistance, humidity resistance, heat resistance, *etc.* are made superior.

When a resin composition for optical three-dimensional modeling according to the present invention contains an aromatic compound having 3 or more glycidyl-etherified phenol groups expressed by the following formula (B-3a) (hereinafter referred to as "aromatic compound (B-3)") as a part of a cationically polymerizable organic compound (B), a resin composition for optical three-dimensional modeling to yield a three-dimensionally modeled object with a high heat deflection temperature rendering superior heat resistance and stiffness can be obtained.

When an aromatic compound (B-3) is contained as a part of cationically polymerizable organic compound (B) in order to improve the heat resistance and stiffness of a three-dimensionally modeled object to be obtained by optical modeling, the content of an aromatic compound (B-3) is preferably from 1 to 30 mass-% based on the total mass of a cationically polymerizable organic compound (B), more preferably from 2 to 20 mass-%, and further preferably from 3 to 10 mass-%.

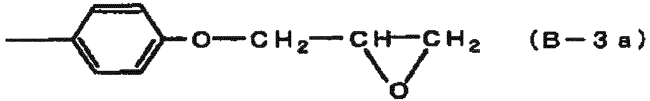

There is no particular restriction on an aromatic compound (B-3) having 3 or more glycidyl-etherified phenol groups, and any of the aromatic compound (B-3) may be used insofar as the viscosity of a resin composition for optical three-dimensional modeling can be maintained at a viscosity level suitable for optical three-dimensional modeling when the same is contained. Examples thereof include a polyglycidyl ether of a phenol resin, such as a novolac resin and a resol resin, tetraglycidyl ether of tetraphenolethane, triglycidyl ether of triphenolmethane, and the aforedescribed VG3101L namely 2-[4-(2,3-epoxypropoxy)phenyl]-2-[4-[1,1-bis[4-([2,3-epoxypr opoxy]phenyl]ethyl]phenyl]propane.

When the VG3101L namely 2-[4-(2,3-epoxypropoxy)phenyl]-2-[4-[1,1-bis[4-([2,3-epoxypr opoxy]phenyl]ethyl]phenyl]propane is added as a part of a cationically polymerizable organic compound in a resin composition for optical three-dimensional modeling, the heat deflection temperature of a three-dimensionally modeled object to be yielded by optical modeling is enhanced and the heat resistance is improved. When VG3101L is added as a part of a cationically polymerizable organic compound (B) in order to improve the heat resistance of a three-dimensionally modeled object to be yielded by optical modeling, the content of VG3101L based on the total mass of a cationically polymerizable organic compound (B) is preferably from 1 to 30 mass-%, more preferably from 2 to 20 mass-%, and further preferably from 3 to 10 mass-%.

A resin composition for optical three-dimensional modeling according to the present invention should preferably contain a cationically polymerizable organic compound (especially an epoxy compound) other than an oxetane compound (B-1) based on the total mass of a cationically polymerizable organic compound (B) contained in the resin composition for optical three-dimensional modeling at a content of from 50 to 97 mass-%, more preferably at a content of from 55 to 95 mass-%, and further preferably at a content of from 60 to 90 mass-%.

When a cationically polymerizable organic compound (especially an epoxy compound) other than an oxetane compound (B-1) is contained based on the total mass of a cationically polymerizable organic compound (B) at the above content, the mechanical strength, etc. of a three-dimensionally modeled object to be yielded by optical modeling can be improved.

As a radical polymerization initiator (C), any polymerization initiator that can initiate a radical polymerization of a radically polymerizable organic compound (A) when irradiated with an active energy ray can be used. Examples thereof include benzil or a dialkyl acetal compound derived thereof, a phenyl ketone compound, an acetophenone compound, benzoin or an alkyl ether compound derived thereof, a benzophenone compound, and a thioxanthone compound.

Specifically, examples of benzil or a dialkyl acetal compound derived thereof include benzil dimethyl ketal, and benzyl-β-methoxyethyl acetal.

Examples of a phenyl ketone compound include 1-hydroxycyclohexyl phenyl ketone.

Examples of an acetophenone compound include diethoxy acetophenone, 2-hydroxymethyl-1-phenylpropan-1-one, 4'-isopropyl-2-hydroxy-2-methylpropiophenone, 2-hydroxy-2-methylpropiophenone, *p*-dimethyl aminoacetophenone, *p-tert*-butyldichloroacetophenone, *p*-*tert*-butyltrichloroacetophenone, and *p*-azidobenzalacetophenone.

Examples of a benzoin compound include benzoin, benzoin methyl ether, benzoin ethyl ether, benzoin isopropyl ether, benzoin *n*-butyl ether, and benzoin isobutyl ether.

Examples of a benzophenone compound include benzophenone, methyl o-benzoylbenzoate, Michler's ketone, 4,4'-bis(diethytamino)benzophenone, and 4,4'-dichlorobenzophenone.

Examples of a thioxanthone compound include thioxanthone, 2-methylthioxanthone, 2-ethylthioxanthone, 2-chlorothioxanthone, and 2-isopropylthioxanthone.

According to the present invention, 1, or 2 or more kinds of radical polymerization initiators (C) in combination may be used corresponding to a desired performance.

Among them, as a radical polymerization initiator (C) according to the present invention 1-hydroxycyclohexyl phenyl ketone may be used preferably from a viewpoint of a favorable hue (low yellowness) of a cured product to be yielded.

According to the present invention, as a cationic polymerization initiator (D), any polymerization initiator that can initiate a cationic polymerization of a cationically polymerizable organic compound (B) when irradiated with an active energy ray such as light can be used. Among them an onium salt which releases a Lewis acid when irradiated with an active energy ray is preferably used as a cationic polymerization initiator (D). Examples of such an onium salt include an aromatic sulfonium salt of a group VIIa element, an aromatic sulfonium salt of a group VIa element, and an aromatic sulfonium salt of a group Va element

Representative examples include a cationic polymerization initiator, in which a sulfonium ion expressed by the general formula: (R¹¹)(R¹²)(R¹³)S⁺, (wherein, R¹¹, R¹² and R¹³ are independently a monovalent organic group bonded to sulfur (S)), or an iodonium ion expressed by the general formula: (R¹⁴)(R¹⁵)I⁺, (wherein, R¹⁴ and R¹⁵ are independently a monovalent organic group bonded to iodine (I)), bonds with an anion (phosphate ion) expressed by the general formula: (Rf)ₘPF₆₋ₘ⁻, (wherein, Rf is a fluoroalkyl group, and m is an integer of 0 to 6), an anion (antimonate ion) expressed by the general formula: (Rf)ₙSbF₆₋ₘ⁻, (wherein, Rf is a fluoroalkyl group, n is an integer of 0 to 6), an anion expressed by the formula BF₄⁻, or an anion expressed by the formula AsF₆⁻.

More specifically, a cationic polymerization initiator may include, for example, but not limited to, a phosphorous type sulfonium compound (D-1) expressed by the following general formula (D-1), and an antimony type sulfonium compound (D-2) expressed by the following general formula (D-2). 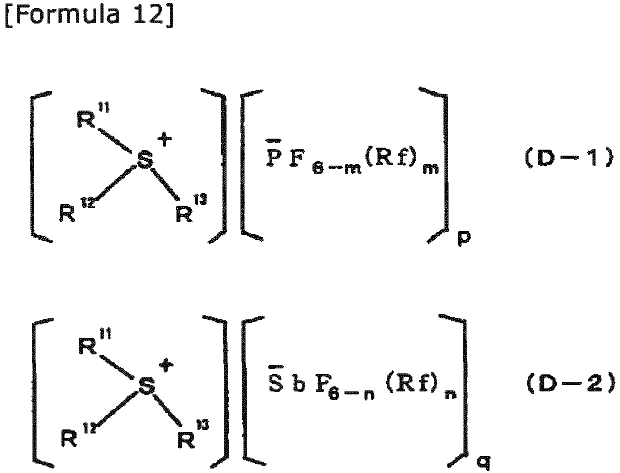 (in the general formulas (D-1) and (D-2), R¹¹, R¹², and R¹³ are a monovalent organic group, Rf is a fluoroalkyl group, m and n are an integer of 0 to 6, p is the same number as a cationic valence of a cation [S⁺(R¹¹)(R¹²)(R¹³)] in the general formula (D-1), and q is the same number as a cationic valence of a cation [S⁺(R¹¹)(R¹²)(R¹³)] in the general formula (D-2).

With respect to a phosphorous type sulfonium compound (D-1) and an antimony type sulfonium compound (D-2) expressed by the general formulas, representative examples of R¹¹, R¹² and R¹³ include groups expressed by the following formulas «1» to «11». 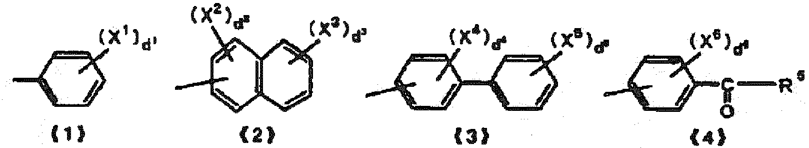 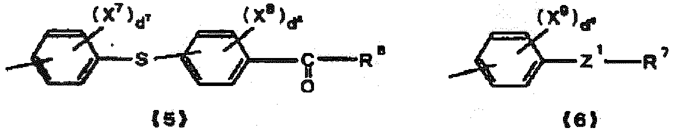 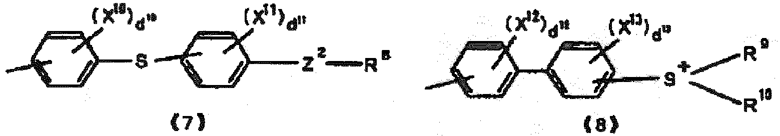 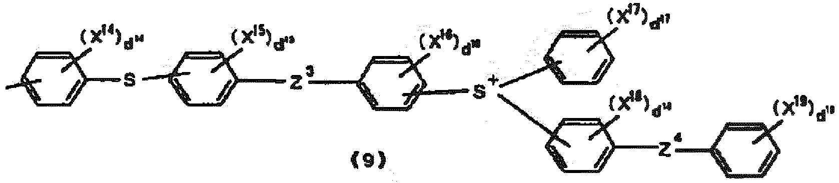 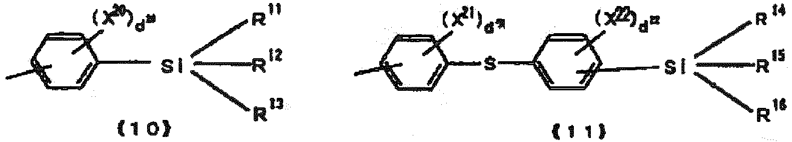 (wherein R⁵, R⁶, R⁷, R⁸ R⁹, R¹⁰, R¹¹, R¹², R¹³, R¹⁴, R¹⁵ and R¹⁶ are independently an alkyl group or an aryl group, which may or may not have a substituent; X¹, X², X³, X⁴, X⁵, X⁶, X⁷, X⁸, X⁹, X¹⁰, X¹¹, X¹², X¹³, X¹⁴, X¹⁵, X¹⁶, X¹⁷, X¹⁸, X¹⁹, X²⁰, X²¹, and X²² are independently a group selected out of an alkyl group, an aryl group, an alkoxy group, an aryloxy group, a hydroxy (poly)alkyleneoxy group, a hydroxy group, a cyano group, a nitro group, and a halogen atom; Z¹, Z², Z³ and Z⁴ are independently a divalent group selected out of formulas: -S-, -SO- and -O-; independently , d¹ is an integer of 0 to 5; d², d³ and d⁴ are an integer of 0 to 4; d⁵ is an integer of 0 to 5; d⁶, d⁷, d⁸, d⁹, d¹⁰, d¹¹, d¹², d¹³, d¹⁴, d¹⁵, and d¹⁶ are an integer of 0 to 4; d¹⁷ is an integer of 0 to 5; d¹⁸ is an integer of 0 to 4; d¹⁹ is an integer of 0 to 5; d²⁰, d²¹, and d²² are an integer of 0 to 4.

Specific examples of a phosphorous type sulfonium compound (D-1) expressed by the above general formula include, but are not limited to, triphenylsulfonium tris(perfluoroethyl)trifluorophosphate, a compound expressed by the following formula (D-1α) ("CPI-500K", produced by San-Apro Ltd.), a compound expressed by the following formula (D-1β) ("CPI-500P", produced by San-Apro Ltd.), a compound expressed by the following formula (D-1γ) ("CPI-200K", produced by San-Apro Ltd.), and 4-[(2-chloro-4-benzoylphenyl)thio]phenyl bis(4-fluorophenyl)sulfonium hexafluorophosphate) ("SP-152", produced by Adeka Corporation).

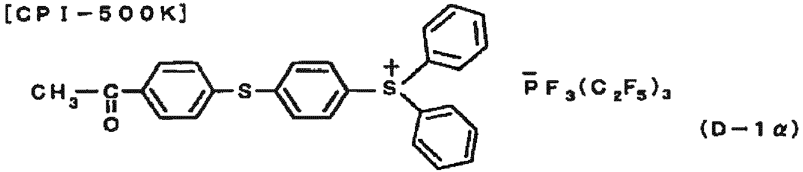

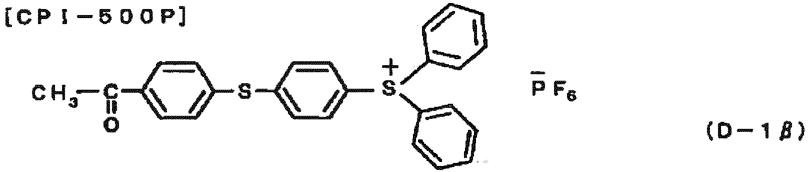

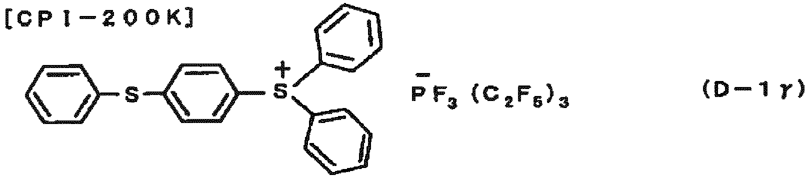

Specific examples an antimony type sulfonium compound (D-2) expressed by the above general formula include bis-[4-(diphenylsulfonio)phenyl]sulfide bisdihexafluoroantimonate, bis-[4-(di-4'-hydroxyethoxyphenylsulfonio)phenyl]sulfide bisdihexafluoroantimonate, 4-(phenylthio)phenyl diphenyl sulfonium hexafluoroantimonate expressed by the following formula (D-2a) ("CPI-101A" or "CPI-110S", produced by San-Apro Ltd.), and 4-(2-chloro-4-benzoylphenylthio)phenyl bis(4-fluorophenyl)sulfonium hexafluoroantimonate ("SP-172", produced by Adeka Corporation).

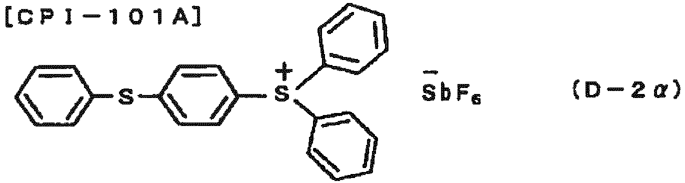

According to the present invention, 1, or 2 or more kinds of the above cationic polymerization initiators may be used. Among them an aromatic sulfonium salt is used particularly favorably according to the present invention.

Further, according to the present invention, a photosensitizer, such as benzophenone, alkoxyanthracene, dialkoxyanthracene, and thioxanthone, may be used according to need together with a cationic polymerization initiator (D) in order to increase the reaction rate.

A resin composition for optical three-dimensional modeling according to the present invention contains preferably a radically polymerizable organic compound (A) at a content of from 10 to 50 mass-% based on the total mass of the resin composition for optical three-dimensional modeling, more preferably from 10 to 40 mass-%, and especially preferably from 15 to 35 mass-%, a cationically polymerizable organic compound (B) at a content of from 30 to 95 mass-%, more preferably from 40 to 80 mass-%, and especially preferably from 45 to 75 mass-%, a radical polymerization initiator (C) at a content of from 0.1 to 10 mass-%, more preferably from 1 to 8 mass-%, and especially from 1 to 5 mass-%, and a cationic polymerization initiator (D) at a content of from 0.1 to 10 mass-%, more preferably from 1 to 8 mass-%, and especially preferably from 1 to 5 mass-%, from viewpoints of the viscosity, reaction rate, and modeling speed of the composition, as well as the toughness, impact resistance, durability, heat deflection temperature (heat resistance), dimension accuracy, and mechanical properties of a three-dimensionally modeled object to be yielded.

A resin composition for optical three-dimensional modeling according to the present invention may contain, if necessary and to the extent that the advantageous effects of the present invention are not impaired, 1, or 2 or more kinds out of a colorant such as a dye, a defoaming agent, a leveling agent, a thickener, a flame retardant, an antioxidant, and a resin modifier in an appropriate amount.

For carrying out optically three-dimensional modeling using an optical modeling resin composition according to the present invention, any of heretofore known optical three-dimensional modeling methods and apparatus may be used. Representative examples of an optical three-dimensional modeling method to be adopted preferably include a method by which an optical modeling resin composition according to the present invention in a liquid-form is irradiated selectively so as to obtain a cured layer having a desired pattern with an active energy ray to form a cured layer, and then an uncured liquid optical modeling resin composition is supplied to the cured layer, and irradiated identically with an active energy ray to form a new cured layer continuous with the abovementioned cured layer, and this layering operation is repeated to complete finally an intended three-dimensional modeled object.

Examples of the then used active energy ray include ultraviolet light, electron beam, X-ray, radiation, and high-frequency wave as described above. Among them, ultraviolet light having a wavelength of from 300 to 400 nm is preferably used from an economical viewpoint, and as a light source therefor, an ultraviolet light laser (for example, semiconductor excitation solid-state laser, Ar laser, and He-Cd laser), a high-pressure mercury lamp, an ultra-high pressure mercury lamp, a low-pressure mercury lamp, a xenon lamp, a halogen lamp, a metal halide lamp, an ultraviolet LED (light emitting diode), an ultraviolet light fluorescent lamp, *etc.* may be used.

For forming each cured resin layer with a predetermined pattern by irradiating with an active energy ray a modeling surface composed of a resin composition for optical three-dimensional modeling, a cured resin layer may be formed using a sharply narrowed active energy ray such as a laser beam by a stipple drawing or line drawing method, or a modeling method may be adopted, by which a cured resin layer is formed by irradiating a modeling surface with an active energy ray in a planar form through a planar drawing mask formed by arraying a plurality of minute light shutters, such as liquid crystal shutters, or digital micromirror shutters (DMD).

An optical modeling resin composition according to the present invention can be used broadly in an optical three-dimensional modeling field, and representative application segments, where the composition can be used effectively, include, but not limited to, a shape verification model for verifying an appearance design in the middle of a design work, a function test model for testing the function of a part, a master model for producing a casting mold, a master model for producing a mold, a directly prepared mold for a trial production mold, a lens for an automobile or a motorbike, a field of fine arts and crafts, including restoration and copying of an art work, a design presentation model for a contemporary art, or a glass-walled building, and a model for a high precision part, an electrical and electronic element, furniture, a building structure, an automobile part, various containers, and a cast-metal object, a matrix, and a processing material.

### EXAMPLES

The present invention will be described specifically by way of Examples below, provided that the present invention be not restricted in any way by the Examples.

In the examples, measurements of the viscosity of a resin composition for optical three-dimensional modeling, the mechanical properties [tensile properties (tensile breaking strength, tensile elongation at break, tensile modulus), yield strength, flexural properties (flexural strength, flexural modulus), impact strength], heat deflection temperature, yellowness, and total light transmittance of an optically modeled object yielded by optical modeling using an optical modeling resin composition were conducted as follows.
(1) Viscosity of optical modeling resin composition:
   An optical modeling resin composition was placed in a thermostatic chamber at 25°C to adjust the temperature of a light curing resin composition to 25°C, and the viscosity was measured with a Brookfield type viscometer (produced by Tokyo Keiki Inc.).
(2) Tensile properties of optically modeled object (tensile breaking strength, tensile elongation at break, and tensile modulus):
   For an optically modeled object produced in Example or Comparative Example (dumbbell shaped specimens according to JIS K-7113), the tensile breaking strength (tensile strength), tensile elongation at break (tensile elongation), and tensile modulus of a specimen were measured according to JIS K-7113.
(3) Yield strength of optically modeled object
   A strength at a point where an optically modeled object was changed from elastic to plastic in the tensile property tests (2) was defined as a yield strength.
(4) Flexural properties of optically modeled object (flexural strength, and flexural modulus):
   For optically modeled objects produced in the following Examples or Comparative Examples (bar shaped specimens according to JIS K-7171), the flexural strength and flexural modulus of the specimens were measured according to JIS K-7171).
(5) Impact strength of optically modeled object
   A notched Izod impact strength was measured according to JIS K-7110 with a digital impact tester (Model DG-18, produced by Toyo Seiki Seisaku-Sho, Ltd.
(6) Heat deflection temperature of optically modeled object:
   For optically modeled objects produced in the following Examples or Comparative Examples (bar shaped specimens according to JIS K-7171), using a "HDT TESTER 6M-2" produced by Toyo Seiki Seisaku-Sho, Ltd. the heat deflection temperature of a specimen was measured by applying a load of 1.81 MPa to the specimen according to JIS K-7207(method A), further the heat deflection temperature by applying a load of 0.45 MPa to the specimen was measured according to JIS K-7207 (method B).
(7) Yellowness of optically modeled object:
   A yellow index (YI) according to JIS K-7373 was determined by a color analysis using an ultraviolet-visible spectrophotometer "UV-3900H" produced by Hitachi High-Technologies Corp. and defined as the yellowness of an optically modeled object.
(8) Total light transmittance of optically modeled object:
   A double beam-standard illuminant D65-spectral transmittance was measured with an ultraviolet-visible spectrophotometer "UV-3900H" produced by Hitachi High-Technologies Corp.

### «Example 1»

(1) A resin composition for optical three-dimensional modeling was prepared by mixing well 18 parts by mass of tricyclodecanedimethanol diacrylate ("NK-A-DCP", produced by Shin-Nakamura Chemical Co., Ltd.), 2 parts by mass of a mixture of dipentaerythritol pentaacrylate and dipentaerythritol hexaacrylate ("A9550W", produced by Shin-Nakamura Chemical Co., Ltd.), 10 parts by mass of poly(ethylene glycol) monoacrylate ["BLEMMER AE200" (monoacrylate of poly(ethylene glycol), bonded number of ethylene oxide units ≈ 4.5, average molecular weight: approx. 200), produced by Nippon Oil & Fats Co., Ltd.], 51 parts by mass of hydrogenated bisphenol A diglycidyl ether ("HBE100", produced by New Japan Chemical Co., Ltd.), 5 parts by mass of bisphenol A diglycidyl ether ("EP-4100E", produced by Adeka Corporation), 10 parts by mass of 3-ethyl -3-hydroxymethyloxetane ("OXT-101", produced by Toagosei Co., Ltd.), 2 parts by mass of 1-hydroxy-cyclohexyl phenyl ketone (radical polymerization initiator, "IRGACURE 184", produced by BASF SE), and 2 parts by mass of a cationic polymerization initiator expressed by the above formula (D-1β) ("CPI-500P", produced by San-Apro Ltd.) (the total was 100 parts by mass).
   The viscosity of the resin composition for optical three-dimensional modeling measured according to the above method was 308 mPa·s(25°C).
(2) Optical three-dimensional modeling was carried out with the resin composition for optical three-dimensional modeling prepared in (1) above by using an ultra-high speed optical modeling system ("SOLIFORM250", produced by Nabtesco Corporation) with a semiconductor laser (rated output power 200 mW; wavelength 355 nm, produced by Spectra-Physics K.K.) under conditions of: irradiation energy at a liquid surface of 100 mJ/cm², slice pitch (layer thickness) of 0.10 mm, and average modeling time of 2 min per layer, to prepare specimens for physical property measurements (dumbbell shaped specimen according to JIS K-7113, bar shaped specimens according to JIS K-7171, and specimens for an Izod impact test according to JIS K-7110) as well as a 10 mm-thick specimen for measuring yellowness and total light transmittance. The prepared specimens were irradiated with ultraviolet light (metal halide lamp, wavelength 365 nm, and intensity 3.0 mW/cm²) for 20 min to be postcured.

The mechanical properties, heat deflection temperature, yellowness, and total light transmittance of the postcured specimens were measured according to the aforedescribed methods. The results were as shown in the following Table 1.

### «Example 2»

(1) A resin composition for optical three-dimensional modeling was prepared identically with (1) of Example 1, except that 10 parts by mass of poly(ethylene glycol) monoacrylate ["BLEMMER AE400" (monoacrylate of poly(ethylene glycol): bonded number of ethylene oxide units ≈ 10, average molecular weight: approx. 400), produced by Nippon Oil & Fats Co., Ltd.] was used instead of 10 parts by mass of poly(ethylene glycol) monoacrylate (BLEMMER AE200) in (1) of Example 1.
   The viscosity of the resin composition for optical three-dimensional modeling was measured according to the above method to find 388 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 1.

### «Example 3»

(1) A resin composition for optical three-dimensional modeling was prepared identically with (1) of Example 1, except that 5 parts by mass of poly(ethylene glycol) monoacrylate ["BLEMMER AE400" (monoacrylate of poly(ethylene glycol) with bonded number of ethylene oxide units ≈ 10, average molecular weight of approx. 400), produced by Nippon Oil & Fats Co., Ltd.], and 5 parts by mass of poly(ethylene glycol) monoacrylate ["BLEMMER AE90" (monoacrylate of poly(ethylene glycol) with bonded number of ethylene oxide units ≈ 2, average molecular weight of approx. 90), produced by Nippon Oil & Fats Co., Ltd.], were used instead of 10 parts by mass of poly(ethylene glycol) monoacrylate (BLEMMER AE200) in (1) of Example 1. The viscosity of the resin composition for optical three-dimensional modeling measured according to the above method was 334 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 1.

### «Example 4»

(1) A resin composition for optical three-dimensional modeling was prepared identically with (1) of Example 1, except that 2 parts by mass of dipentaerythritol hexaacrylate ("A-DPH", produced by Shin-Nakamura Chemical Co., Ltd.) was used instead of 2 parts by mass of A9550W (a mixture of dipentaerythritol pentaacrylate and dipentaerythritol hexaacrylate) in (1) of Example 1.
   The viscosity of the resin composition for optical three-dimensional modeling was measured according to the above method to find 340 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 1.

### «Example 5»

(1) A resin composition for optical three-dimensional modeling was prepared by mixing well 14 parts by mass of tricyclodecanedimethanol diacrylate ("A-DCP"), 6 parts by mass of ditrimethylolpropane tetraacrylate ("AD-TMP", produced by Shin-Nakamura Chemical Co., Ltd.), 10 parts by mass of poly(ethylene glycol) monoacrylate ("BLEMMER AE200": bonded number of ethylene oxide units ≈ 4.5, average molecular weight ≈ 200), 51 parts by mass of hydrogenated bisphenol A diglycidyl ether ("HBE100"), 5 parts by mass of bisphenol Adiglycidyl ether ("EP-4100E"), 10 parts by mass of 3-ethyl-3-hydroxymethyloxetane ("OXT-101"), 2 parts by mass of 1-hydroxy-cyclohexyl phenyl ketone ("IRGACURE 184") (radical polymerization initiator), and 2 parts by mass of a cationic polymerization initiator expressed by the formula (D-1β) ("CPI-500P") (the total was 100 parts by mass).
   The viscosity of the resin composition for optical three-dimensional modeling was measured according to the above method to find 352 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 1.

### «Example 6»

(1) A resin composition for optical three-dimensional modeling was prepared by mixing well 13 parts by mass of tricyclodecanedimethanol diacrylate (A-DCP), 2 parts by mass of a mixture of dipentaerythritol pentaacrylate and dipentaerythritol hexaacrylate ("A9550W"), 10 parts by mass of poly(ethylene glycol) monoacrylate ("BLEMMER AE200"; bonded number of ethylene oxide units ≈ 4.5, average molecular weight ≈ 200), 49 parts by mass of hydrogenated bisphenol A diglycidyl ether ("HBE100"), 3 parts by mass of 2-[4-(2,3-epoxypropoxy)phenyl]-2-[4-[1,1-bis[4-([2,3-epoxypr opoxy]phenyl]ethyl]phenyl]propane ("VG3101L" described above), 5 parts by mass of 3,4-epoxycyclohexylmethyl-3',4'-epoxycyclohexanecarboxylate ("Cel-2021P" produced by Daicel Corporation), 10 parts by mass of 3-ethyl-3-hydroxymethyloxetane ("OXT-101"), 2 parts by mass of bis(3-ethyl-3-oxetanylmethyl) ether ("OXT221", produced by Toagosei Co., Ltd.), 2 parts by mass of 1-hydroxy-cyclohexyl phenyl ketone ("IRGACURE 184") (radical polymerization initiator), and 4 parts by mass of a cationic polymerization initiator expressed by the formula (D-1γ) ("CPI-200K" produced by San-Apro Ltd.) (the total was 100 parts by mass).
   The viscosity of the resin composition for optical three-dimensional modeling was measured according to the above method to find 310 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 2.

### «Example 7»

(1) A resin composition for optical three-dimensional modeling was prepared by mixing well 18 parts by mass of tricyclodecanedimethanol diacrylate ("NK-A-DCP"), 2 parts by mass of a mixture of dipentaerythritol pentaacrylate and dipentaerythritol hexaacrylate ("A9550W"), 10 parts by mass of poly(ethylene glycol) monoacrylate ("BLEMMER AE200": bonded number of ethylene oxide units ≈ 4.5, average molecular weight ≈ 200), 47 parts by mass of hydrogenated bisphenol A diglycidyl ether ("HBE100"), 3 parts by mass of 2-[4-(2,3-epoxypropoxy)phenyl]-2-[4-[1,1-bis[4-([2,3-epoxypr opoxy]phenyl]ethyl]phenyl]propane ("VG3101L" described above), 2 parts by mass of 3,4-epoxycyclohexylmethyl-3',4'-epoxycyclohexanecarboxylate ("Cel-2021P"), 2 parts by mass of an oligomer of an alicyclic epoxy ("EHPE-3150" produced by Daicel Corporation), 10 parts by mass of 3-ethyl-3-hydroxymethyloxetane ("OXT-101"), 2 parts by mass of bis(3-ethyl-3-oxetanylmethyl) ether ("OXT221", produced by Toagosei Co., Ltd.), 2 parts by mass of 1-hydroxy-cyclohexyl phenyl ketone ("IRGACURE 184", produced by BASF SE) (radical polymerization initiator), 1.2 parts by mass of a cationic polymerization initiator ("CPI-500P") expressed by the above formula (D-1β), 0.4 part by mass of a cationic polymerization initiator ("CPI-500K") expressed by the above formula (D-1α), and 0.4 part by mass of a cationic polymerization initiator ("CPI-200K") expressed by the above formula (D-1γ) (the total was 100 parts by mass).
   The viscosity of the resin composition for optical three-dimensional modeling was measured according to the above method to find 360 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 2.

### «Example 8»

(1) A resin composition for optical three-dimensional modeling was prepared by mixing well 16 parts by mass of tricyclodecanedimethanol diacrylate ("NK-A-DCP"), 2 parts by mass of a mixture of dipentaerythritol pentaacrylate and dipentaerythritol hexaacrylate ("A9550W"), 10 parts by mass of poly(ethylene glycol) monoacrylate ("BLEMMER AE200": bonded number of ethylene oxide units ≈ 4.5, average molecular weight ≈ 200)), 27 parts by mass of hydrogenated bisphenol A diglycidyl ether ("HBE100"), 27 parts by mass of 3,4-epoxycyclohexylmethyl-3',4'-epoxycyclohexanecarboxylate ("Cel-2021P"), 12 parts by mass of 3-ethyl-3-hydroxymethyloxetane ("OXT-101"), 2 parts by mass of 1-hydroxy-cyclohexyl phenyl ketone ("IRGACURE 184") (radical polymerization initiator), and 4 parts by mass of a cationic polymerization initiator expressed by the above formula (D-1γ) ("CPI-200K", produced by San-Apro Ltd.) (the total was 100 parts by mass). The viscosity of the resin composition for optical three-dimensional modeling was measured according to the above method to find 156 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 2.

### «Example 9»

(1) A resin composition for optical three-dimensional modeling was prepared by mixing well 13 parts by mass of tricyclodecanedimethanol diacrylate ("NK-A-DCP"), 2 parts by mass of a mixture of dipentaerythritol pentaacrylate and dipentaerythritol hexaacrylate ("A9550W"), 10 parts by mass of poly(ethylene glycol) monoacrylate ("BLEMMER AE200": bonded number of ethylene oxide units ≈ 4.5, average molecular weight ≈ 200), 49 parts by mass of hydrogenated bisphenol A diglycidyl ether ("HBE100"), 3 parts by mass of 2-[4-(2,3-epoxypropoxy)phenyl]-2-[4-[1,1-bis[4-([2,3-epoxypr opoxy]phenyl]ethyl]phenyl]propane (the above "VG3101L"), 5 parts by mass of 3,4-epoxycyclohexylmethyl-3',4'-epoxycyclohexanecarboxylate ("Cel-2021P"), 10 parts by mass of 3-ethyl-3-hydroxymethyloxetane ("OXT-101"), 2 parts by mass of bis(3-ethyl-3-oxetanyl methyl) ether ("OXT221", produced by Toagosei Co., Ltd.), 2 parts by mass of 1-hydroxy-cyclohexyl phenyl ketone ("IRGACURE 184") (radical polymerization initiator), and 4 parts by mass of 4-(phenylthio)phenyl diphenyl sulfonium hexafluoroantimonate expressed by the formula (D-2α) ("CPI-101A", produced by San-Apro Ltd.) (the total was 100 parts by mass).
   The viscosity of the resin composition for optical three-dimensional modeling was measured according to the above method to find 314 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 2.

### «Example 10»

(1) A resin composition for optical three-dimensional modeling was prepared identically with (1) of Example 1, except that 2 parts by mass of tetraacrylate of 4 mol adduct of ethylene oxide onto pentaerythritol ("ATM-4E", produced by Shin-Nakamura Chemical Co., Ltd.) was used instead of 2 parts by mass of "A9550W" (a mixture of dipentaerythritol pentaacrylate and dipentaerythritol hexaacrylate) in (1) of Example 1; and poly(propylene glycol)monoacrylate ["BLEMMER AP150" (bonded number of propylene oxide units ≈ 2.5, average molecular weight ≈ 150), produced by Nippon Oil & Fats Co., Ltd.] was used instead of 10 parts by mass of poly(ethylene glycol)monoacrylate ("BLEMMER AE200").
   The viscosity of the resin composition for optical three-dimensional modeling measured according to the above method was 290 mPa·s(25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 2.

### «Comparative Example 1»

(1) A resin composition for optical three-dimensional modeling was prepared by mixing well 18 parts by mass of tricyclodecanedimethanol diacrylate ("NK-A-DCP"), 2 parts by mass of a mixture of dipentaerythritol pentaacrylate and dipentaerythritol hexaacrylate ("A9550W"), 51 parts by mass of hydrogenated bisphenol A diglycidyl ether ("HBE100"), 3 parts by mass of 2-[4-(2,3-epoxypropoxy)phenyl]-2-[4-[1,1-bis[4-([2,3-epoxypr opoxy]phenyl]ethyl]phenyl]propane (the above "VG3101L"), 10 parts by mass of 3-ethyl-3-hydroxymethyloxetane ("OXT-101), 2 parts by mass of bis(3-ethyl-3-oxetanylmethyl) ether ("OXT221", produced by Toagosei Co., Ltd.), 2 parts by mass of 1-hydroxy-cyclohexyl phenyl ketone ("IRGACURE 184") (radical polymerization initiator), and 2 parts by mass of a cationic polymerization initiator expressed by the above formula (D-1β) ("CPI-500P")(the total was 100 parts by mass).
   The viscosity of the resin composition for optical three-dimensional modeling was measured according to the above method to find 508 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 3.

### «Comparative Example 2»

(1) A resin composition for optical three-dimensional modeling was prepared identically with (1) of Example 1, except that 10 parts by mass of poly(tetramethylene glycol) ("PTG-850SN", average molecular weight ≈ 850, produced by Hodogaya Chemical Co., Ltd.) was used instead of 10 parts by mass of poly(ethylene glycol)monoacrylate ("BLEMMER AE200") in (1) of Example 1.
   The viscosity of the resin composition for optical three-dimensional modeling was measured according to the above method to find 462 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 3.

### «Reference Example 1»

(1) A resin composition for optical three-dimensional modeling was prepared identically with (1) of Example 1, except that 10 parts by mass of 3-ethyl-3-hydroxymethyloxetane ("OXT-101") in (1) of Example 1 was not added (the total was 90 parts by mass).
   The viscosity of the resin composition for optical three-dimensional modeling was measured according to the above method to find 556 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 3.

### «Reference Example 2»

(1) A resin composition for optical three-dimensional modeling was prepared identically with (1) of Example 1, except that 10 parts by mass of 2-hydroxyethyl acrylate (produced by Tokyo Chemical Industry Co., Ltd.) was used instead of 10 parts by mass of poly(ethylene glycol)monoacrylate in (1) of Example 1.
   The viscosity of the resin composition for optical three-dimensional modeling was measured according to the above method to find 208 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 3.

### «Reference Example 3»

(1) A resin composition for optical three-dimensional modeling was prepared identically with (1) of Example 1, except that 10 parts by mass of poly(ethylene glycol)diacrylate ("A-600", average molecular weight ≈ 600, produced by Shin-Nakamura Chemical Co., Ltd.) was used instead of 10 parts by mass of poly(ethylene glycol)monoacrylate ("BLEMMER AE200") in (1) of Example 1.
   The viscosity of the resin composition for optical three-dimensional modeling was measured according to the above method to find 356 mPa·s (25°C).
(2) Using the resin composition for optical three-dimensional modeling prepared in (1) above, specimens for measuring physical properties were produced identically with (2) of Example 1, and postcured by irradiating the produced specimens with ultraviolet light (metal halide lamp, wavelength 365 nm, intensity 3.0 mW/cm²) for 20 min.

The mechanical properties, heat deflection temperature, yellowness, and total light transmittance of the postcured specimens were measured according to the aforedescribed methods. The results were as shown in the following Table 3.

**[Table 1]**

| | Example 1 | Example 2 | Example 3 | Example 4 | Example 5 |
|---|---|---|---|---|---|
| **[Resin composition for optical three-dimensional modeling]** | | | | | |
| •Radically polymerizable organic compound [A): | | | | | |
| Tricyclodecane dimethanol diacrylate | 18 | 18 | 18 | 18 | 14 |
| Mixture of pentaacrylate and hexaacrylate of dipentacrythritol (A9550W) | 2 | 2 | 2 | | |
| Dipentacrythritol hexaacrylate | | | | 2 | |
| Ditrimethylolpropane tetraacrylate | | | | | 6 |
| Ethoxylaled pentacrythrilol tetraacrylate (added with 4 mol of ethylene oxide) | | | | | |
| Poly(ethylene glycol)monoacrylate (BLEMMER AE200) | 10 | | | 10 | 10 |
| Poly(ethylene glycol)monoacrylate (BLEMMER AE400) | | 10 | 5 | | |
| Poly(ethylene glycol)monoacrylate (BLEMMER AE90) | | | 5 | | |
| Poly(propylene glycol)monoacrylate (BLEMMER AP150) | | | | | |
| Poly(ethylene glycol)diacrylate (average molecular weight approx. 600) | | | | | |
| 2-hydroxy ethyl acrylate | | | | | |
| •Cationically polymerizable organic compound (B): | | | | | |
| Hydrogenaled bispherol A diglycidyl ether | 51 | 51 | 51 | 51 | 51 |
| Bisphenol A diglycidyl ether | 5 | 5 | 5 | 5 | 5 |
| VG3101L | | | | | |
| 3-4-epoxycyclohexylmethyl-3',4'-epoxycyclohexanecarboxylate | | | | | |
| Oligomer of alicyclic epoxy | | | | | |
| 3-ethyl-3-hydroxymethyloxetane | 10 | 10 | 10 | 10 | 10 |
| Bis(3-ethyl-3oxetanyl-methyl)eher | | | | | |
| •Radical polymerization initiator (C): | | | | | |
| 1-hydroxycyclohexyl phenyl ketone | 2 | 2 | 2 | 2 | 2 |
| •Cationic polymerization initiator (D) | | | | | |
| CPI-500P (phosphorous type sulfoniun compound catalyst) | 2 | 2 | 2 | 2 | 2 |
| CPI-500K (phosphorous type sulfonium compound catalyst) | | | | | |
| CPI-200K (phosphorous type sulfonium compound catalyst) | | | | | |
| CPI-101A(antimony type sulfonium compound calalyst) | | | | | |
| •Poly tetramethylene glycol (average molecular weight approx 850) | | | | | |
| Total | 100 | 100 | 100 | 100 | 100 |
| **[Physical properties of optical modeling resin composition]** | | | | | |
| Viscosity (mPa·s) | 308 | 388 | 334 | 340 | 352 |
| **[Physical properties of optically modeled object]** Tensile breaking strength (MPa) | 36 | 29 | 28 | 33 | 28 |
| Tensile elongation at break (%) | 7 | 7 | 7 | 16 | 22 |
| Tensile modulus (MPa) | 1860 | 1600 | 1560 | 1730 | 1600 |
| Yield strength (MPa) | 49 | 41 | 37 | 45 | 38 |
| Flexural strength (MPa) | 70 | 54 | 48 | 55 | 54 |
| Flexural modulus (MPa) | 2210 | 1630 | 1440 | 1740 | 1640 |
| Impact strength (kJ/m²) | 3.9 | 5.0 | 4.2 | 4.4 | 3.6 |
| Heat deflection temperature (°C): | | | | | |
| Method A (load 1.81 MPa) | 42 | 39 | 39 | 43 | 42 |
| Method B (load 0.45 MPa) | 45 | 41 | 42 | 46 | 45 |
| Yellowness | 9.5 | 9.2 | 9.3 | 8.4 | 7.0 |
| Total light transmittance(%) | 87 | 87 | 87 | 87 | 89 |

**[Table 2]**

| | Example 6 | Example 7 | Example 8 | Example 9 | Example 10 |
|---|---|---|---|---|---|
| **[Resin composition for optical three-dimensional modeling]** | | | | | |
| •Radically polymerizable organic compound [A): | | | | | |
| Tricyclodecane dimethanol diacylale | 13 | 18 | 16 | 13 | 18 |
| Mixture of pentaacrylale and hexaacrylate of dipentacrythritol (A9550W) | 2 | 2 | 2 | 2 | |
| Dipentacrythritol hexaacrylale | | | | | |
| Ditrimethylolpropane tetraacrylale | | | | | |
| Ethoxylated pentacrythritol tetraacrylate (added with 4 mol of ethylene oxide) | | | | | 2 |
| Poly(ethylene glycol)monoacrylate (BLEMMER AE200) | 10 | 10 | 10 | 10 | |
| Poly(ethylene glycol)monoacrylate (BLEMMER AE400) | | | | | |
| Poly(ethylene glycol)monoacrylate (BLEMMER AE90) | | | | | |
| Poly(propylene glycol)monoacrylate (BLEMMER AP150) | | | | | 10 |
| Poly(ethylene glycol)diacrylale (average molecular weight approx. 600) | | | | | |
| 2-hydroxy ethyl acrylate | | | | | |
| •Cationically polymerizable organic compound (B): | | | | | |
| Hydrogenated bisphenol A diglycidyl ether | 49 | 47 | 27 | 49 | 51 |
| Bisphenol A diglycidyl ether | | | | | 5 |
| VG3101L | 3 | 3 | | 3 | |
| 3,4-epoxycyclohexylmethyl-3',4'-epoxycyclohexanecarboxylate | 5 | 2 | 27 | 5 | |
| Oligomer of alicyclic epoxy | | 2 | | | |
| 3-ethyl-3-hydroxymethyloxetane | 10 | 10 | 12 | 10 | 10 |
| Bis(3-ethyl-3-exetanyl-methyl)ether | 2 | 2 | | 2 | |
| •Radical polymerization initiator(C): | | | | | |
| 1-hydroxycyclohexyl phenyl ketone | 2 | 2 | 2 | 2 | 2 |
| •Cationic polymerization initiator (D) | | | | | |
| CPI-500P (phosphorous type sulfonium compound catalyst) | | 1.2 | | | 2 |
| CPI-500K (phosphorous type sulfonium compound catalyst) | | 0.4 | | | |
| CPI-200K (phosphorous type sulfonium compound catalyst) | 4 | 0.4 | 4 | | |
| CPI-101A (antimony type sulfonium compound catalyst) | | | | 4 | |
| •Poly letramethylene glycol (average molecular weight approx. 850) | | | | | |
| Total | 100 | 100 | 100 | 100 | 100 |
| **[Physical properties of optical modeling resin composition]** | | | | | |
| Viscosity (mPa·s) | 310 | 360 | 156 | 314 | 290 |
| **[Physical properties of optically modeled object]** | | | | | |
| Tensile breaking strength(MPa) | 29 | 39 | 42 | 33 | 34 |
| Tensile elongation at break (%) | 17 | 6 | 5 | 10 | 10 |
| Tensile modulus (MPa) | 1610 | 1920 | 1900 | 1690 | 1850 |
| Yield strength (MPa) | 41 | 51 | 53 | 45 | 48 |
| Flexural strength (MPa) | 56 | 74 | 73 | 59 | 68 |
| Flexural modulus (MPa) | 1680 | 2400 | 2210 | 1830 | 2270 |
| Impact strength (kJ/m²) | 4.7 | 3.4 | 3.4 | 3.3 | 3.3 |
| Heat deflection temperature (°C): | | | | | |
| Method A (load 1.81 MPa) | 43 | 44 | 49 | 46 | 43 |
| Method B (load 0.45 MPa) | 47 | 47 | 52 | 49 | 46 |
| Yellowness | 5.8 | 9.0 | 7.5 | 6.8 | 6.6 |
| Total light transmittance (%) | 88 | 88 | 89 | 89 | 88 |

**[Table 3]**

| | Comparative Example 1 | Comparative Example 2 | Reference Example 1 | Reference Example 2 | Reference Example 3 |
|---|---|---|---|---|---|
| **[Resin composition for optical three-dimensional modeling]** | | | | | |
| •Radically polymerizable organic compound [A): | | | | | |
| Tricyclodecane dimethanol diacrylate | 18 | 18 | 18 | 18 | 18 |
| Mixture of pentaacrylate and hexaacrylate of dipentacrythrilol (A9550W) | 2 | 2 | 2 | 2 | 2 |
| Dipentacrythritol hexaacrylate | | | | | |
| Ditrimethylolpropane tetraaylate | | | | | |
| Ethoxylated pentacrythritol tetracrylate (added with 4 mol of ethylene oxide) | | | | | |
| Poly(ethylene glycol)monoacrylate (BLEMMER AE200) | | | 10 | | |
| Poly(ethylene glyco)monoacrylate (BLEMMER AE400) | | | | | |
| Poly(ethylene glycol)monoacrylate (BLEMMER AE90) | | | | | |
| Poly(propylene glycol)monoacrylate (BLEMMER AP150) | | | | | |
| Poly(ethylene glycol)diacrylate (average molecular weight approx. 600) | | | | | 10 |
| 2-hydroxy ethyl acrylate | | | | 10 | |
| •Cationically polymerizable organic compound (B): | | | | | |
| Hydrogenaled bisphenol A diglycidyl ether | 51 | 51 | 51 | 51 | 51 |
| Bisphenol A diglycidyl ether | | 5 | 5 | 5 | 5 |
| vG3101L | 3 | | | | |
| 3,4-epoxycyclohexylmethyl-3',4'epoxycyclohexanecarbonyl ate | | | | | |
| Oligomer of alicyclic epoxy | | | | | |
| 3-ethyl-3-hydroxymethyloxetane | 10 | 10 | | 10 | 10 |
| Bis(3-ethy)-3-oxetanyl-methyl)ether | 2 | | | | |
| •Radical polymerization initiator (C): | | | | | |
| 1-hydroxycyclohexyl phenyl ketone | 2 | 2 | 2 | 2 | 2 |
| •Cationic polymerization initiator (D) | | | | | |
| CPI-500P (phosphorous type sulfonium compound catalyst) | 2 | 2 | 2 | 2 | 2 |
| CPI-500K (phosphorous type sulfonium compound catalyst) | | | | | |
| CPI-200K (phosphorous type sulfonium compound catalyst) | | | | | |
| CPI-101A (antimony type sulfonium compound catalyst) | | | | | |
| •Polytetramethylene glycol (average molecular weight approx.850) | | 10 | | | |
| Total | 90 | 100 | 90 | 100 | 100 |
| **[Physical properties of optical modeling resin composition]** | | | | | |
| Viscosity(mPa·s) | 508 | 462 | 556 | 208 | 356 |
| **[Physical properties of optically modeled object]** | | | | | |
| Tensile breaking strength (MPa) | 29 | 29 | 29 | 48 | 31 |
| Tensile elongation at break (%) | 8 | 37 | 22 | 5 | 10 |
| Tensile modulus (MPa) | 1360 | 1040 | 1260 | 2110 | 1660 |
| Yield strength (MPa) | 36 | 30 | 31 | 57 | 43 |
| Flexural strength (MPa) | 56 | 26 | 47 | 79 | 56 |
| Flexural modulus (MPa) | 2030 | 560 | 1500 | 2630 | 1720 |
| Impact strength (kl/m²) | 1.1 | 5.3 | 2.9 | 2.7 | 2.9 |
| Heat deflection temperature (°C): | | | | | |
| Method A (load 1.81 MPa) | 44 | 36 | 41 | 48 | 41 |
| Method B (load 0.45 MPa) | 49 | 41 | 44 | 51 | 44 |
| Yellowness | 21.9 | 41.8 | 6.4 | 11.5 | 8.4 |
| Total light transmitiance (%) | 78 | 66 | 89 | 88 | 88 |

As shown in the above Table 1 to Table 3, with respect to a resin composition for optical three-dimensional modeling containing a radically polymerizable organic compound (A), a cationically polymerizable organic compound (B), a radical polymerization initiator (C), and a cationic polymerization initiator (D), because the resin compositions for optical three-dimensional modeling of Examples 1 to 10 contain a poly(alkylene glycol)mono(meth)acrylate as a part of the radically polymerizable organic compound (A) and an oxetane compound as a part of the cationically polymerizable organic compound (B), a three-dimensionally modeled object obtained therefrom by optical modeling exhibits an impact strength value as high as 3.2 kJ/m² or more, and superior toughness and durability, further the three-dimensionally modeled object exhibits a yellowness of 9.5 or less indicating little yellowish coloring, and a total light transmittance (light transmission rate) as high as 86.8% or more, namely exhibits superior color tone and transparency.

In contrast thereto, since the resin composition for optical three-dimensional modeling of Comparative Example 1 contains indeed an oxetane compound as a part of a cationically polymerizable organic compound (B), but does not contain a poly(alkylene glycol)mono(meth)acrylate as a part of a radically polymerizable organic compound (A), a three-dimensionally modeled object obtained therefrom by optical modeling exhibits an impact strength value as low as 1.1 kJ/m² indicating low toughness and weak resistance to breakage, further the three-dimensionally modeled object is colored yellowish with a yellowness of as high as 21.9, and has a total light transmittance (light transmission rate) as low as 78.4%, namely is inferior in color tone and transparency.

Meanwhile, since the resin composition for optical three-dimensional modeling of Comparative Example 2 contains poly(tetramethylene glycol), a three-dimensionally modeled object obtained therefrom by optical modeling is superior in toughness with an impact strength value as high as 5.3 kJ/m², however the three-dimensionally modeled object is strongly colored yellowish with a yellowness of as extremely high as 41.8, and has a total light transmittance (light transmission rate) as low as 65.5%, namely is seriously inferior in color tone and transparency.

Further, since the resin composition for optical three-dimensional modeling of Reference Example 1 contains indeed a poly(alkylene glycol)mono(meth)acrylate (poly(ethylene glycol)monoacrylate) as a part of a radically polymerizable organic compound (A), but does not contain an oxetane compound as a part of a cationically polymerizable organic compound (B), a three-dimensionally modeled object obtained therefrom by optical modeling exhibits an impact strength considerably improved from Comparative Example 1, however the impact strength value is still lower than Examples 1 to 10.

Since the resin composition for optical three-dimensional modeling of Reference Example 2 contains indeed an oxetane compound as a part of a cationically polymerizable organic compound (B), but contains 2-hydroxyethyl acrylate instead of a poly(alkylene glycol)mono(meth)acrylate as a mono(meth)acrylate to be contained as a part of a radically polymerizable organic compound (A), a three-dimensionally modeled object obtained by optical modeling from the resin composition for optical three-dimensional modeling of Reference Example 2 is inferior to Examples 1 to 10 in terms of impact strength. Further, a three-dimensionally modeled object obtained by optical modeling from the resin composition for optical three-dimensional modeling of Reference Example 2 has a yellowness of 11.5 exceeding 10 indicating severer yellowish coloring compared to Examples 1 to 10.

Further, since the resin composition for optical three-dimensional modeling of Reference Example 3 contains indeed an oxetane compound as a part of a cationically polymerizable organic compound (B), but contains poly(ethylene glycol)diacrylate as a part of a radically polymerizable organic compound (A) instead of a poly(alkylene glycol)mono(meth)acrylate, a three-dimensionally modeled object obtained by optical modeling from the resin composition for optical three-dimensional modeling of Reference Example 3 is inferior to Examples 1 to 10 in terms of impact strength.

### Industrial Applicability

A resin composition for optical three-dimensional modeling according to the present invention has such characteristics as high curing sensitivity to an active energy ray, and a low viscosity assuring a superior handling property during modeling, which offers high resolution of a modeled object and superior modeling accuracy, and also a obtained three-dimensionally modeled object obtained by optical modeling has a high impact strength assuring superior toughness, and further with respect to the three-dimensionally modeled object the yellowness is low and the light transmittance is high so that the color tone and transparency is superior. Therefore, a resin composition for optical three-dimensional modeling according to the present invention can be used effectively for various applications, for which a three-dimensionally modeled object having a high transparency, and being superior in appearance and color tone without yellowish coloring, or a three-dimensionally modeled object being superior in mechanical properties, such as strength, elastic characteristics, impact resistance, and toughness, is required, and examples of such applications include a model for verifying an appearance design on various industrial products in the middle of a design work, a model for testing the function of a part, a resin mold for producing a casting mold, a base model for producing a mold, a lens for an automobile or a motorbike, a field of fine arts and crafts, including restoration and copying of an art work, a design presentation model for a contemporary art, or a glass-walled building, and a model for a high precision part, an electrical and electronic element, furniture, a building structure, an automobile part, various containers, and a cast-metal object.

## Claims

1. A resin composition for optical three-dimensional modeling comprising:
(i) a radically polymerizable organic compound (A), a cationically polymerizable organic compound (B), a radical polymerization initiator (C), and a cationic polymerization initiator (D);
(ii) a poly(alkylene glycol) mono(meth)acrylate (A-1) as a part of the radically polymerizable organic compound (A); and
(iii) an oxetane compound (B-1) as a part of the cationically polymerizable organic compound (B).

2. The resin composition for optical three-dimensional modeling according to claim 1, comprising a monooxetane compound (B-1a) having an oxetane group, or comprising a monooxetane compound (B-1a) having an oxetane group and a polyoxetane compound (B-1b) having 2 or more oxetane groups, as the oxetane compound (B-1).

3. The resin composition for optical three-dimensional modeling according to claim 1 or 2, wherein the content of the poly(alkylene glycol) mono(meth)acrylate (A-1) based on the total mass of the radically polymerizable organic compound (A) is from 5 to 70 mass-%, and the content of the oxetane compound based on the total mass of the cationically polymerizable organic compound (B) is from 3 to 50 mass-%.

4. The resin composition for optical three-dimensional modeling according to any one of claims 1 to 3, comprising a di(meth)acrylate compound (A-2) expressed by the following general formula (A-2) as a part of the radically polymerizable organic compound (A) at a content of from 10 to 95 mass-% based on the total mass of the radically polymerizable organic compound (A): 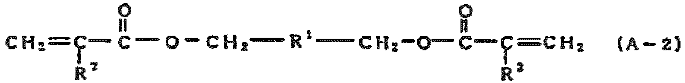 (wherein, R¹ represents a crosslinking cyclic hydrocarbon group, and R² represents a hydrogen atom, or a methyl group).

5. The resin composition for optical three-dimensional modeling according to any one of claims 1 to 4, comprising an alicyclic diglycidyl ether compound (B-2) expressed by the following general formula (B-2) as a part of the cationically polymerizable organic compound (B) at a content of from 10 to 97 mass-% based on the total mass of the cationically polymerizable organic compound (A): 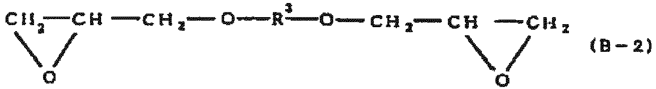 (wherein, R³ represents a hydrogenated bisphenol A residue, a hydrogenated bisphenol E residue, a hydrogenated bisphenol F residue, a hydrogenated bisphenol AD residue, a hydrogenated bisphenol Z residue, a cyclohexanedimethanol residue, or a tricyclodecanedimethanol residue).

6. The resin composition for optical three-dimensional modeling according to any one of claims 1 to 5, comprising the radically polymerizable organic compound (A) at a content of from 10 to 50 mass-% based on the total mass of the resin composition for optical three-dimensional modeling, the cationically polymerizable organic compound (B) at a content of from 30 to 95 mass-%, the radical polymerization initiator (C) at a content of 0.1 to 10 mass-%, and the cationic polymerization initiator (D) at a content of from 0.1 to 10 mass-%.

7. A method for producing an optically three-dimensionally modeled object using the resin composition for optical three-dimensional modeling according to any one of claims 1 to 6.

8. A three-dimensionally modeled object obtained by optical modeling using the resin composition for optical three-dimensional modeling according to any one of claims 1 to 6.

## Patentansprüche

1. Harzzusammensetzung für optische dreidimensionale Modellierung, umfassend:
(i) eine radikalisch polymerisierbare organische Verbindung (A), eine kationisch polymerisierbare organische Verbindung (B), einen Radikalpolymerisationsinitiator (C) und einen Initiator der kationischen Polymerisation (D);
(ii) ein Poly(alkylenglycol)mono(meth)acrylat (A-1) als ein Teil der radikalisch polymerisierbaren organischen Verbindung (A); und
(iii) eine Oxetanverbindung (B-1) als ein Teil der kationisch polymerisierbaren organischen Verbindung (B).

2. Harzzusammensetzung für optische dreidimensionale Modellierung gemäß Anspruch 1, umfassend eine Monooxetanverbindung (B-1a) mit einer Oxetangruppe, oder umfassend eine Monooxetanverbindung (B-1a) mit einer Oxetangruppe und eine Polyoxetanverbindung (B-1b) mit 2 oder mehr Oxetangruppen, als die Oxetanverbindung (B-1).

3. Harzzusammensetzung für optische dreidimensionale Modellierung gemäß Anspruch 1 oder 2, wobei der Gehalt des Poly(alkylenglycol)mono(meth)acrylats (A-1), bezogen auf die Gesamtmasse der radikalisch polymerisierbaren organischen Verbindung (A), 5 bis 70 Massen% beträgt und der Gehalt der Oxetanverbindung, bezogen auf die Gesamtmasse der kationisch polymerisierbaren organischen Verbindung (B), 3 bis 50 Massen% beträgt.

4. Harzzusammensetzung für optische dreidimensionale Modellierung gemäß einem der Ansprüche 1 bis 3, umfassend eine Di(meth)acrylatverbindung (A-2), die durch die folgende allgemeine Formel (A-2) wiedergegeben ist, als ein Teil der radikalisch polymerisierbaren organischen Verbindung (A) in einem Gehalt von 10 bis 95 Massen%, bezogen auf die Gesamtmasse der radikalisch polymerisierbaren organischen Verbindung (A): 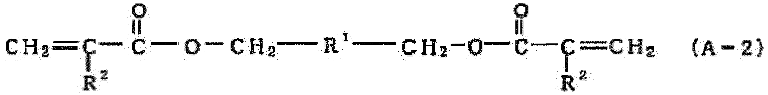 (wobei R¹ eine vernetzende cyclische Kohlenwasserstoffgruppe bedeutet und R² ein Wasserstoffatom oder eine Methylgruppe bedeutet).

5. Harzzusammensetzung für optische dreidimensionale Modellierung gemäß einem der Ansprüche 1 bis 4, umfassend eine alicyclische Diglycidyletherverbindung (B-2), die durch die folgende allgemeine Formel (B-2) wiedergegeben ist, als ein Teil der kationisch polymerisierbaren organischen Verbindung (B) in einem Gehalt von 10 bis 97 Massen%, bezogen auf die Gesamtmasse der kationisch polymerisierbaren organischen Verbindung (A): 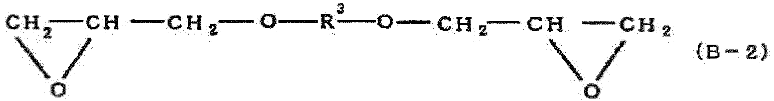 (wobei R³ einen hydrierten Bisphenol A-Rest, einen hydrierten Bisphenol E-Rest, einen hydrierten Bisphenol F-Rest, einen hydrierten Bisphenol AD-Rest, einen hydrierten Bisphenol Z-Rest, einen Cyclohexandimethanolrest oder einen Tricyclodecandimethanolrest bedeutet).

6. Harzzusammensetzung für optische dreidimensionale Modellierung gemäß einem der Ansprüche 1 bis 5, umfassend die radikalisch polymerisierbare organische Verbindung (A) in einem Gehalt von 10 bis 50 Massen%, bezogen auf die Gesamtmasse der Harzzusammensetzung für optische dreidimensionale Modellierung, die kationisch polymerisierbare organische Verbindung (B) in einem Gehalt von 30 bis 95 Massen%, den Radikalpolymersationsinitiator (C) in einem Gehalt von 0,1 bis 10 Massen% und den Initiator der kationischen Polymerisation (D) in einem Gehalt von 0,1 bis 10 Massen%.

7. Verfahren zum Herstellen eines optisch dreidimensional modellierten Gegenstands unter Verwendung der Harzzusammensetzung für optische dreidimensionale Modellierung gemäß einem der Ansprüche 1 bis 6.

8. Dreidimensional modellierter Gegenstand, erhalten durch optische Modellierung unter Verwendung der Harzzusammensetzung für optische dreidimensionale Modellierung gemäß einem der Ansprüche 1 bis 6.

## Revendications

1. Composition de résine pour modélisation tridimensionnelle optique comprenant :
(i) un composé organique polymérisable par voie radicalaire (A), un composé organique polymérisable par voie cationique (B), un amorceur de polymérisation radicalaire (C) et un amorceur de polymérisation cationique (D) ;
(ii) un mono(méth)acrylate de poly(alkylène glycol) (A-1) en tant que partie du composé organique polymérisable par voie radicalaire (A) ; et
(iii) un composé oxétane (B-1) en tant que partie du composé organique polymérisable par voie cationique (B).

2. Composition de résine pour modélisation tridimensionnelle optique selon la revendication 1, comprenant un composé mono-oxétane (B-1a) ayant un groupe oxétane, ou comprenant un composé mono-oxétane (B-1a) ayant un groupe oxétane et un composé polyoxétane (B-1b) ayant deux groupes oxétane ou plus, en tant que composé oxétane (B-1).

3. Composition de résine pour modélisation tridimensionnelle optique selon la revendication 1 ou 2, dans laquelle la teneur du mono(méth)acrylate de poly(alkylène glycol) (A-1) sur la base de la masse totale du composé organique polymérisable par voie radicalaire (A) va de 5 à 70 % en masse, et la teneur du composé oxétane sur la base de la masse totale du composé organique polymérisable par voie cationique (B) va de 3 à 50 % en masse.

4. Composition de résine pour modélisation tridimensionnelle optique selon l'une quelconque des revendications 1 à 3, comprenant un composé di(méth)acrylate (A-2) exprimé par la formule générale (A-2) suivante en tant que partie du composé organique polymérisable par voie radicalaire (A) en une teneur allant de 10 à 95 % en masse sur la base de la masse totale du composé organique polymérisable par voie radicalaire (A) : 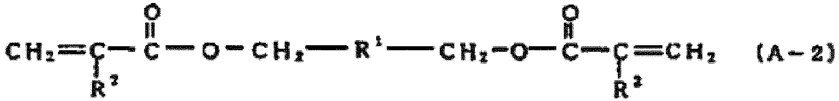 (dans laquelle R¹ représente un groupe hydrocarbure cyclique réticulant, et R² représente un atome d'hydrogène, ou un groupe méthyle).

5. Composition de résine pour modélisation tridimensionnelle optique selon l'une quelconque des revendications 1 à 4, comprenant un composé éther de diglycidyle alicyclique (B-2) exprimé par la formule générale (B-2) suivante en tant que partie du composé organique polymérisable par voie cationique (B) en une teneur allant de 10 à 97 % en masse sur la base de la masse totale du composé organique polymérisable par voie cationique (A) : 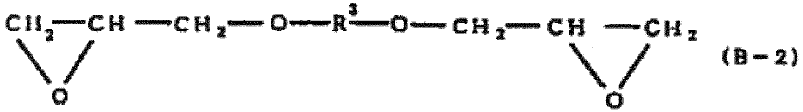 (dans laquelle R³ représente un résidu de bisphénol A hydrogéné, un résidu de bisphénol E hydrogéné, un résidu de bisphénol F hydrogéné, un résidu de bisphénol AD hydrogéné, un résidu de bisphénol Z hydrogéné, un résidu de cyclohexanediméthanol ou un résidu de tricyclodécanediméthanol).

6. Composition de résine pour modélisation tridimensionnelle optique selon l'une quelconque des revendications 1 à 5, comprenant le composé organique polymérisable par voie radicalaire (A) en une teneur allant de 10 à 50 % en masse sur la base de la masse totale de la composition de résine pour modélisation tridimensionnelle optique, le composé organique polymérisable par voie cationique (B) en une teneur allant de 30 à 95 % en masse, l'amorceur de polymérisation radicalaire (C) en une teneur de 0,1 à 10 % en masse et l'amorceur de polymérisation radicalaire (D) en une teneur allant de 0,1 à 10 % en masse.

7. Procédé pour produire un objet modélisé optiquement en trois dimensions en utilisant la composition de résine pour modélisation tridimensionnel optique selon l'une quelconque des revendications 1 à 6.

8. Objet modélisé en trois dimensions obtenu par moulage optique en utilisant la composition de résine pour modélisation tridimensionnelle optique selon l'une quelconque des revendications 1 à 6.
